(19) **Europäisches Patentamt**
**European Patent Office**
**Office européen des brevets**

(11) **EP 4 322 605 A1**

(12) **EUROPEAN PATENT APPLICATION**
published in accordance with Art. 153(4) EPC

(43) Date of publication:
**14.02.2024 Bulletin 2024/07**

(21) Application number: **22794652.2**

(22) Date of filing: **18.04.2022**

(51) International Patent Classification (IPC):
**H04W 28/02** $^{(2009.01)}$

(52) Cooperative Patent Classification (CPC):
**H04B 7/185; H04W 28/02**

(86) International application number:
**PCT/CN2022/087392**

(87) International publication number:
**WO 2022/228181 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.04.2021 CN 202110461637**

(71) Applicant: **Huawei Technologies Co., Ltd.
Shenzhen, Guangdong 518129 (CN)**

(72) Inventors:
- **CHEN, Ying
  Shenzhen, Guangdong 518129 (CN)**
- **WANG, Jun
  Shenzhen, Guangdong 518129 (CN)**
- **LI, Rong
  Shenzhen, Guangdong 518129 (CN)**
- **QIAO, Yunfei
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION PARAMETER INDICATION METHOD AND APPARATUS**

(57) This application provides a communication parameter indication method and an apparatus, to reduce time drift in satellite communication. In the method, a terminal device may obtain first information, where the first information may indicate a quantity of time units of a first message. The first information may be related to a relative speed between a network device and the terminal device. The terminal device may send the first message based on the quantity of time units. Based on the foregoing solution, the first information may indicate the quantity of time units for transmitting the first message by the terminal device, so that time drift caused by a timing advance TA value can be reduced, and transmission performance of an uplink signal can be improved.

```
        ┌─────────────────┐              ┌─────────────────┐
        │ Terminal device │              │ Network device  │
        └────────┬────────┘              └────────┬────────┘
        ┌────────┴──────────────────┐             │
        │ S801: Obtain first information │          │
        └────────┬──────────────────┘             │
                 │──────S802: First message──────▶ │
        ┌ ─ ─ ─ ─┴─ ─ ─ ─ ─ ─ ─┐                  │
         S803: Determine a timing                  │
          advance value        │                   │
        └ ─ ─ ─ ─ ─ ─ ─ ─ ─ ─ ─┘                  │
                 │                                  │
```

FIG. 8

EP 4 322 605 A1

**Description**

**CROSS-REFERENCE TO RELATED APPLICATIONS**

This application claims priority to Chinese Patent Application No. 202110461637.0, filed with the China National Intellectual Property Administration on April 27, 2021 and entitled "COMMUNICATION PARAMETER INDICATION METHOD AND APPARATUS", which is incorporated herein by reference in its entirety.

**TECHNICAL FIELD**

This application relates to the field of wireless communication technologies, and in particular, to a communication parameter indication method and an apparatus.

**BACKGROUND**

In comparison with terrestrial communication, satellite communication has a unique advantage thereof. For example, the satellite communication can provide wider coverage; and a satellite base station is not vulnerable to a natural disaster or external force. If the satellite communication is introduced to a 5th generation communication system (5th generation mobile network, 5G) in the future, a communication service may be provided for some areas that cannot be covered by a terrestrial communication network, such as an ocean and a forest, to enhance reliability of 5G communication. For example, it can be ensured that an airplane, a train, and users on these vehicles obtain a better communication service, and more data transmission resources can be provided for 5G communication, to improve a network rate. Therefore, supporting communication with both the ground and a satellite is an inevitable trend of 5G communication in the future, and has great benefits in terms of wide coverage, reliability, multi-connection, a high throughput, and the like.

An Internet of Things (Internet of Things, IoT) has a communication feature such as data burstiness, latency-insensitiveness, massive connections, wide coverage, and the like. In comparison with another 5G communication scenario, such as an enhanced mobile broadband (enhanced mobile broadband, eMBB) scenario with long communication duration or a latency-sensitive ultra-reliable low-latency communication (ultra-reliable low-latency communication, URLLC) scenario, the IoT can be better supported by the satellite communication. However, in comparison with the terrestrial communication, a satellite has high mobility. How to integrate the IoT and a narrowband Internet of Things (narrowband Internet of Things, NB-IoT) with the satellite communication is an urgent problem to be resolved.

**SUMMARY**

This application provides a communication parameter indication method and an apparatus, to reduce time drift in satellite communication.

According to a first aspect, a communication parameter indication method is provided. The method may be performed by a terminal device or a chip with a similar function of the terminal device. In the method, the terminal device may obtain first information, where the first information may indicate a quantity of time units of a first message. The first information may be related to a relative speed between a network device and the terminal device. The terminal device may send the first message based on the quantity of time units.

Based on the foregoing solution, the first information may indicate the quantity of time units for transmitting the first message by the terminal device, so that time drift caused by a timing advance TA value can be reduced, and transmission performance of an uplink signal can be improved.

In a possible implementation, the terminal device may obtain the first information corresponding to an index of a beam in which the terminal device is located. The terminal device may be based on.

Based on the foregoing solution, the terminal device may obtain the first information corresponding to the index of the beam in which the terminal device is located. Indexes of different beams correspond to relative speeds between the network device and the terminal device in the different beams, so that a quantity of times that a terminal device with a low speed adjusts the timing advance TA value can be reduced, and a transmission delay of the uplink signal can be reduced.

In a possible implementation, the terminal device may obtain the first information corresponding to an index of a synchronization signal block (synchronization signal block, SSB) used during random access.

Based on the foregoing solution, the terminal device may determine the first information based on the index of the SSB, and correspond indexes of different SSBs to different relative speeds between the network device and the terminal device, so that the quantity of times that the terminal device with a low speed adjusts the timing advance TA value can be reduced, and the transmission delay of the uplink signal can be reduced.

In a possible implementation, the quantity of time units may be related to a repetition count or transmission duration. The repetition count is a maximum consecutive repetition count of the first message, and the transmission duration may be maximum consecutive transmission duration of the first message. Optionally, timing advance TA values of the first message in different maximum consecutive transmission duration are different.

Based on the foregoing solution, the first information may indicate the maximum consecutive repetition count and the maximum consecutive transmission duration of the first message, so that time drift caused by long-time data transmission can be reduced.

In a possible implementation, the transmission duration may be related to the repetition count.

Based on the foregoing solution, the terminal device may convert the transmission duration indicated by the first information into the repetition count. Because the repetition count is the maximum consecutive repetition quantity of the first message, the time drift caused by the long-time data transmission can be reduced.

In a possible implementation, the first message may include at least one of uplink data and a random access preamble. When the first message includes the uplink data, the first information may include first transmission duration. Alternatively, when the first message includes the random access preamble, the first information may include second transmission duration. Alternatively, when the first message includes the uplink data and the random access preamble, the first information may include the first transmission duration and the second transmission duration. The first transmission duration may be maximum consecutive transmission duration of the uplink data, and the second transmission duration may be maximum consecutive transmission duration of the random access preamble. Optionally, random access preambles in different formats correspond to different maximum consecutive transmission duration.

Based on the foregoing solution, the first information may respectively indicate a quantity of time units of the uplink data and a quantity of time units of the random access preamble, so that duration for transmitting the uplink data and the random access preamble can be reduced, and time drift can be reduced.

In a possible implementation, the first message may include at least one of uplink data and a random access preamble. When the first message includes the uplink data, the first information may include first transmission duration. Alternatively, when the first message includes the random access preamble, the first information may include the repetition count. Alternatively, when the first message includes the uplink data and the random access preamble, the first information may include the repetition count and the first transmission duration. The repetition count may be a maximum consecutive repetition count of the random access preamble, and the first transmission duration may be maximum consecutive transmission duration of the uplink data.

Based on the foregoing solution, the first information may respectively indicate a quantity of time units of the uplink data and the repetition count of the random access preamble, so that long-time data transmission can be reduced, and time drift can be reduced.

In a possible implementation, the first information may further include a transmission gap. The transmission gap is a gap between two adj acent times of transmission of the first message.

Based on the foregoing solution, the first information may further include the transmission gap, and the terminal device may stop transmitting the first message within the transmission gap, and perform timing advance TA compensation, so that an error of timing advance TA can be reduced, and the transmission performance of the uplink signal can be improved.

In a possible implementation, the first information may be at a cell level, the first information may be at a beam level, or the first information may be at a terminal device level.

Based on the foregoing solution, the first information may be at the cell level or the beam level, and the first information may be indicated by the network device. Therefore, a manner of indicating the first information is more flexible.

In a possible implementation, the relative speed may be determined based on a first parameter and a second parameter. The first parameter may include at least one of the following: elevation information of the network device, location information of the network device, or an ephemeris parameter of the network device. The second parameter may include at least one of the following: location information of a serving cell of the terminal device, location information of a serving beam of the terminal device, or location information of the terminal device.

Based on the foregoing solution, the relative speed between the terminal device and the network device may be determined based on at least one of a related parameter of the network device and a related parameter of the terminal device, so that the first information can be determined.

According to a second aspect, a communication parameter indication method is provided. The method may be performed by a network device or a chip similar to the network device. In the method, the network device may send first information, where the first information may indicate a quantity of time units of a first message. The first information may be related to a relative speed between the network device and a terminal device. The network device may obtain the first message.

Based on the foregoing solution, the first information may indicate the quantity of time units for transmitting the first message by the terminal device, so that time drift caused by a timing advance TA value can be reduced, and transmission performance of an uplink signal can be improved.

In a possible implementation, the network device may send the first information corresponding to at least one index of a beam.

Based on the foregoing solution, the network device may indicate, to the terminal device, the first information corresponding to the index of the beam. Indexes of different beams correspond to relative speeds between the network device and the terminal device in the different beams, so that a quantity of times that a terminal device with a low speed adjusts the timing advance TA value can be reduced, and a transmission delay of the uplink signal can be reduced.

In a possible implementation, the quantity of time units may be related to a repetition count or transmission duration. The repetition count is a maximum consecutive repetition count of the first message, and the transmission duration may be maximum consecutive transmission duration of the first message. Optionally, timing advance TA values of the first message in different maximum consecutive transmission duration are different.

Based on the foregoing solution, the first information may indicate the maximum consecutive repetition count and the maximum consecutive transmission duration of the first message, so that time drift caused by long-time data transmission can be reduced.

In a possible implementation, the transmission duration may be related to the repetition count.

Based on the foregoing solution, the terminal device may convert transmission duration indicated by the first information into a repetition count. Because the repetition count is the maximum consecutive repetition quantity of the first message, the time drift caused by the long-time data transmission can be reduced.

In a possible implementation, the first message may include at least one of uplink data and a random access preamble. When the first message includes the uplink data, the first information may include first transmission duration. Alternatively, when the first message includes the random access preamble, the first information may include second transmission duration. Alternatively, when the first message includes the uplink data and the random access preamble, the first information may include the first transmission duration and the second transmission duration. The first transmission duration may be maximum consecutive transmission duration of the uplink data, and the second transmission duration may be maximum consecutive transmission duration of the random access preamble. Optionally, random access preambles in different formats correspond to different maximum consecutive transmission duration.

Based on the foregoing solution, the first information may respectively indicate a quantity of time units of the uplink data and a quantity of time units of the random access preamble, so that duration for transmitting the uplink data and the random access preamble can be reduced, and time drift can be reduced.

In a possible implementation, the first message may include at least one of uplink data and a random access preamble. When the first message includes the uplink data, the first information may include first transmission duration. Alternatively, when the first message includes the random access preamble, the first information may include the repetition count. Alternatively, when the first message includes the uplink data and the random access preamble, the first information may include the repetition count and the first transmission duration. The repetition count may be a maximum consecutive repetition count of the random access preamble, and the first transmission duration may be maximum consecutive transmission duration of the uplink data.

Based on the foregoing solution, the first information may respectively indicate a quantity of time units of the uplink data and the repetition count of the random access preamble, so that long-time data transmission can be reduced, and time drift can be reduced.

In a possible implementation, the first information may further include a transmission gap. The transmission gap is a gap between two adj acent times of transmission of the first message.

Based on the foregoing solution, the first information may further include the transmission gap, and the terminal device may stop transmitting the first message within the transmission gap, and perform timing advance TA compensation, so that an error of timing advance TA can be reduced, and the transmission performance of the uplink signal can be improved.

In a possible implementation, the first information may be at a cell level, the first information may be at a beam level, or the first information may be at a terminal device level.

Based on the foregoing solution, the first information may be at the cell level, the beam level, or the terminal device level, and the first information may be indicated by the network device. Therefore, a manner of indicating the first information is more flexible.

In a possible implementation, the relative speed may be determined based on a first parameter and a second parameter. The first parameter may include at least one of the following: elevation information of the network device, location information of the network device, or an ephemeris parameter of the network device. The second parameter may include at least one of the following: location information of a serving cell of the terminal device, location information of a serving beam of the terminal device, or location information of the terminal device.

Based on the foregoing solution, the relative speed between the terminal device and the network device may be determined based on at least one of a related parameter of the network device and a related parameter of the terminal device, so that the first information can be determined.

According to a third aspect, a communication apparatus is provided, including: a transceiver unit, configured to obtain first information, where the first information indicates a quantity of time units of a first message, and the first information is related to a relative speed between a network device and a terminal device; and a processing unit, configured to generate the first message based on the first information. The transceiver unit is further configured to send the first message.

In a design, the processing unit is specifically configured to: obtain first information corresponding to at least one index of a beam; and obtain, based on an index of a beam in which the communication apparatus is located, the first information corresponding to the index of the beam in which the communication apparatus is located.

In a design, the processing unit is specifically configured to: determine an index of a synchronization signal block SSB used during random access; and determine the first information based on the index of the SSB.

In a design, the quantity of time units may be a repetition count or transmission duration. The repetition count is a maximum consecutive repetition count of the first message, and the transmission duration may be maximum consecutive transmission duration of the first message.

In a design, the transmission duration may be related to the repetition count.

In a design, the first message may include at least one of uplink data and a random access preamble. When the first message includes the uplink data, the first information may include the first transmission duration. Alternatively, when the first message includes the random access preamble, the first information may include second transmission duration. Alternatively, when the first message includes the uplink data and the random access preamble, the first information may include the first transmission duration and the second transmission duration. The first transmission duration may be maximum consecutive transmission duration of the uplink data, and the second transmission duration may be maximum consecutive transmission duration of the random access preamble. Optionally, random access preambles in different formats correspond to different maximum consecutive transmission duration.

In a design, the first message may include at least one of the uplink data and the random access preamble. When the first message includes the uplink data, the first information may include the first transmission duration. Alternatively, when the first message includes the random access preamble, the first information may include the repetition count. Alternatively, when the first message includes the uplink data and the random access preamble, the first information may include the repetition count and the first transmission duration. The repetition count may be a maximum consecutive repetition count of the random access preamble, and the first transmission duration may be maximum consecutive transmission duration of the uplink data.

In a design, the first information further includes a transmission gap, and the transmission gap is a gap between two adjacent times of transmission of the first message.

In a design, the first information is at a cell level, the first information is at a beam level, or the first information may be at a terminal device level.

In a design, the relative speed may be determined based on a first parameter and a second parameter. The first parameter may include at least one of the following: elevation information of the network device, location information of the network device, or an ephemeris parameter of the network device. The second parameter may include at least one of the following: location information of a serving cell of the terminal device, location information of a serving beam of the terminal device, or location information of the terminal device.

According to a fourth aspect, this application provides a communication apparatus, including: a processing unit, configured to generate first information, where the first information indicates a quantity of time units of a first message, and the first information is related to a relative speed between a network device and a terminal device; and a transceiver unit, configured to send the first information. The transceiver unit is further configured to obtain the first message.

In a design, the transceiver unit is specifically configured to send the first information corresponding to at least one index of a beam.

In a design, the quantity of time units may be a repetition count or transmission duration. The repetition count is a maximum consecutive repetition count of the first message, and the transmission duration may be maximum consecutive transmission duration of the first message. Optionally, timing advance TA values of the first message in different maximum consecutive transmission duration are different.

In a design, the transmission duration may be related to the repetition count.

In a design, the first message may include at least one of uplink data and a random access preamble. When the first message includes the uplink data, the first information may include first transmission duration. Alternatively, when the first message includes the random access preamble, the first information may include second transmission duration. Alternatively, when the first message includes the uplink data and the random access preamble, the first information may include the first transmission duration and the second transmission duration. The first transmission duration may be maximum consecutive transmission duration of the uplink data, the second transmission duration may be maximum consecutive transmission duration of the random access preamble, and random access preambles in different formats correspond to different maximum consecutive transmission duration.

In a design, the first message may include at least one of uplink data and a random access preamble. When the first message includes the uplink data, the first information may include first transmission duration. Alternatively, when the first message includes the random access preamble, the first information may include the repetition count.

Alternatively, when the first message includes the uplink data and the random access preamble, the first information may include the repetition count and the first transmission duration. The repetition count may be a maximum consecutive repetition count of the random access preamble, and the first transmission duration may be the maximum consecutive transmission duration of the uplink data.

In a design, the first information further includes a transmission gap, and the transmission gap is a gap between two times of adjacent transmissions of the first message.

In a design, the first information is at a cell level, the first information is at a beam level, or the first information is at a terminal device level.

In a design, the relative speed may be determined based on a first parameter and a second parameter. The first parameter may include at least one of the following: elevation information of the network device, location information of the network device, or an ephemeris parameter of the network device. The second parameter may include at least one of the following: location information of a serving cell of the terminal device, location information of a serving beam of the terminal device, or location information of the terminal device.

According to a fifth aspect, this application provides a communication apparatus, including a processor. The processor is coupled to a memory, the memory is configured to store a computer program or instructions, and the processor is configured to execute the computer program or the instructions, to perform the method in the implementations of the first aspect and/or the second aspect. The memory may be located inside or outside the apparatus. There are one or more processors.

According to a sixth aspect, this application provides a communication apparatus, including a processor and an interface circuit. The interface circuit is configured to communicate with another apparatus, and the processor is for the method in the implementations of the first aspect and/or the second aspect.

According to a seventh aspect, a communication apparatus is provided. The apparatus includes a logic circuit and an input/output interface.

In a design, the input/output interface is configured to input first information, where the first information indicates a quantity of time units of a first message. The first information is related to a relative speed between a network device and a terminal device. The logic circuit is configured to generate the first message based on the first information. The input/output interface is further configured to output the first message.

In a design, the logic circuit is configured to generate the first information, where the first information indicates the quantity of time units of the first message. The first information is related to the relative speed between the network device and the terminal device. The input/output interface is configured to output the first information. The input/output interface is further configured to input the first message.

According to an eighth aspect, this application provides a communication system, including a terminal device configured to perform the method in the implementations of the first aspect and a network device configured to perform the method in the implementations in the second aspect.

According to a ninth aspect, this application further provides a chip system, including a processor, configured to perform the method in the implementations in the first aspect and/or the second aspect.

According to a tenth aspect, this application further provides a computing program product, including computer-executable instructions. When the computer-executable instructions are run on a computer, the method in the implementations in the first aspect and/or the second aspect is implemented.

According to an eleventh aspect, this application further provides a computer-readable storage medium. The computer-readable storage medium stores a computer program or instructions. When the instructions are run on a computer, the method in the implementations in the first aspect and/or the second aspect is implemented.

In addition, for beneficial effect of the third aspect to the eleventh aspect, refer to the beneficial effect shown in the first aspect and the second aspect.

## BRIEF DESCRIPTION OF DRAWINGS

FIG. 1A is a schematic diagram of repetition counts of random access preamble sequences in different formats;
FIG. 1B is a schematic diagram of a repetition manner of a random access preamble sequence;
FIG. 2A is a schematic diagram of narrow beam coverage of a synchronization signal;
FIG. 2B is a schematic diagram of wide beam coverage of a synchronization signal;
FIG. 3 is a schematic diagram of sending uplink data by a terminal device when no timing offset is introduced;
FIG. 4A is a schematic diagram of repeated transmission of a random access preamble sequence;
FIG. 4B is a schematic diagram of repeated transmission of uplink data;
FIG. 5A is a schematic diagram of positive impact of satellite motion on timing advance;
FIG. 5B is a schematic diagram of negative impact of satellite motion on timing advance;

FIG. 6 is a schematic diagram of an architecture of a communication system according to an embodiment of this application;

FIG. 7 is a schematic diagram of an architecture of another communication system according to an embodiment of this application;

FIG. 8 is a schematic flowchart of a communication parameter indication method according to an embodiment of this application;

FIG. 9A is a schematic diagram of maximum consecutive transmission duration according to an embodiment of this application;

FIG. 9B is a schematic diagram of a transmission gap according to an embodiment of this application;

FIG. 10A is a diagram of an impact curve of an elevation angle of a satellite on timing advance according to an embodiment of this application;

FIG. 10B is a diagram of a relationship between an elevation angle of a satellite and maximum consecutive transmission duration according to an embodiment of this application;

FIG. 11 is a schematic diagram of a structure of a communication apparatus according to an embodiment of this application;

FIG. 12 is a schematic diagram 1 of a structure of a communication apparatus according to an embodiment of this application; and

FIG. 13 is a schematic diagram 2 of a structure of a communication apparatus according to an embodiment of this application.

## DESCRIPTION OF EMBODIMENTS

Embodiments of this application can be applied to a non-terrestrial network (non-terrestrial network, NTN), a 4G network, a 5G network, a future communication network, or the like. The following explains and describes terms in embodiments of this application.

1. A random access preamble (preamble), or referred to as a random access preamble sequence, is sent by a terminal device that does not access a network to a network device in a random access process. During four-step random access, the terminal device sends the random access preamble sequence in a message 1 (message 1, Msg1). During two-step random access, the terminal device sends the random access preamble sequence in a message A (message A, MsgA), and the random access preamble sequence is carried through a physical random access channel (physical random access channel, PRACH).

In NB-IoT, the random access preamble sequence is carried through a narrow-band physical random access channel (narrow-band physical random access channel, NPRACH). The random access preamble sequence is transmitted in the NPRACH in a single-tone (single-tone) manner based on frequency hopping. If a subcarrier spacing is 3.75 kHz, there are two types of cyclic prefixes (cyclic prefixes, CPs) whose lengths are respectively 66.7 $\mu$s and 266.7 $\mu$s. The lengths of the two types of CPs respectively support cell coverage radiuses of 10 km and 40 km. If a subcarrier spacing is a 1.25 kHz subcarrier bandwidth, a length of a CP is 800 $\mu$s, and the CP occupies a length of one symbol. Therefore, there are three random access preamble sequence formats in total.

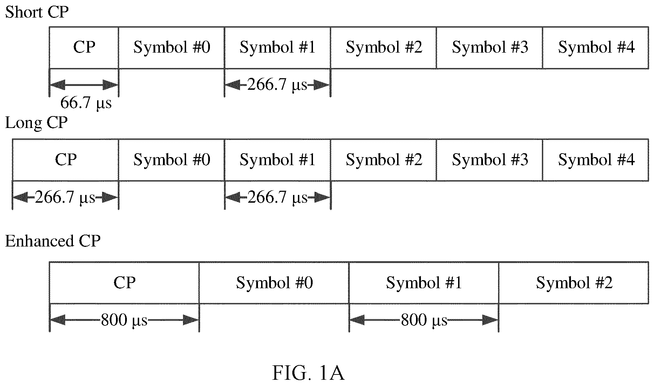

Refer to FIG. 1A. A random access preamble sequence with a subcarrier spacing of 3.75 kHz includes one CP and five symbols, and a random access preamble sequence with a subcarrier spacing of 1.25 kHz includes one CP and three symbols.

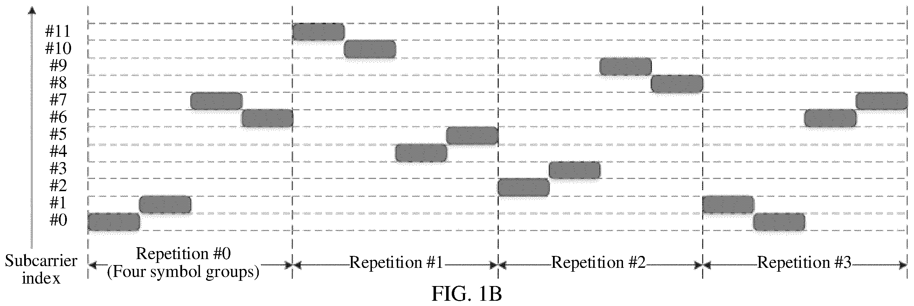

Repetition of a random access preamble sequence is for enhancing coverage, and a configurable repetition count set is {1, 2, 4, 8, 16, 32, 64, 128}. Refer to FIG. 1B. The repetition is performed based on a symbol group. Each time of repetition is formed by a plurality of symbol groups in a frequency hopping manner. Frequency hopping manners between groups may also be different. For a format 0 and a format 1 of the random access preamble sequence, one-time repetition includes four symbol groups. For a format 2, one-time repetition includes six symbol groups. When a format of the random access preamble sequence is the format 0 and the format 1, if a repetition count does not exceed 64, transmission of the random access preamble sequence is consecutive transmission. When the format of the random access preamble sequence is the format 2, if the repetition count does not exceed 16, the transmission of the random access preamble sequence is consecutive transmission, and no additional idleness or uplink spacing is introduced. Table 1 shows sequence duration corresponding to the three random access preamble sequence formats.

**Table 1: Example of one-time repeated transmission duration corresponding to a random access preamble sequence format**

| Random access preamble format (preamble format) | Quantity of symbol groups of one-time repetition | CP length | Sequence length | Duration of one-time repetition |
|---|---|---|---|---|
| 0 | 4 | 2048 $T_s$ | 5.8192 $T_s$ | 5.6 ms |
| 1 | 4 | 8192 $T_s$ | 5.8192 $T_s$ | 6.4 ms |
| 2 | 6 | 24576 $T_s$ | 3 . 24576 $T_s$ | 19.2 ms |

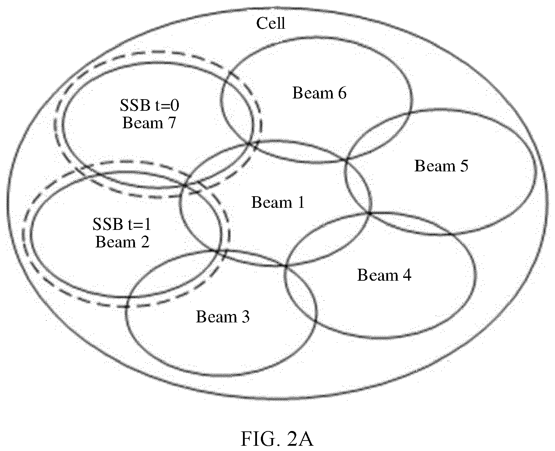

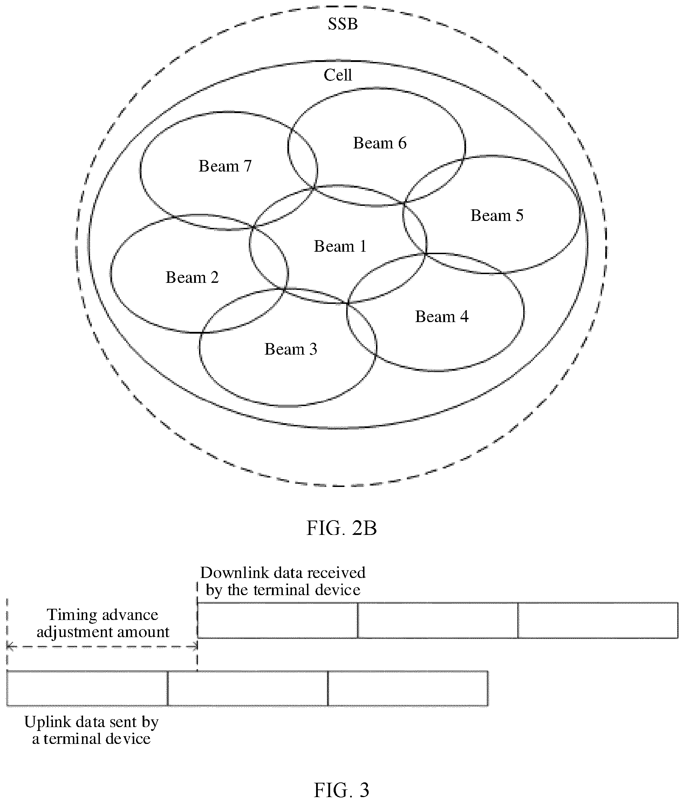

2. A synchronization signal block (synchronization signal block, SSB) is a synchronization signal broadcast by a network device. Before access, a terminal device needs to listen to the synchronization signal broadcast by the network device, and perform downlink synchronization to obtain related information such as a frame boundary. SSB coverage includes two manners: a narrow beam manner and a wide beam manner. In the narrow beam manner, the SSB occupies a fixed frequency domain resource, performs polling scanning by using a narrow beam, and sequentially covers different areas of a cell. The different areas may also be understood as different beams. The terminal device may select a beam corresponding to optimal SSB signal quality for access. For example, FIG. 2A shows a cell including seven beams, and the SSB sequentially covers different beams. FIG. 2A shows, by using dashed lines, a case in which the SSB covers a beam 7 at a moment 0 (t=0), and covers a beam 2 at a moment 1 (t=1). In the wide beam manner, the SSB covers an entire cell by using a wide beam. For example, FIG. 2B shows a cell including seven beams, and shows, by using dashed lines, a case in which the SSB covers the entire cell. In comparison with the narrow beam, the wide beam has more scattered energy, and quality of a signal received by a user is low.

3. Timing advance

In a communication network, information sent by a network device to a terminal device is referred to as downlink information, including downlink control information, downlink data, and the like. Information sent by the terminal device to the network device is referred to as uplink information, including uplink control information, uplink data, and the like. To align timing of the uplink information with timing of the downlink information when the uplink information arrives at the network device, the terminal device needs to perform timing advance (Timing Advance, TA) adjustment when sending the uplink information. FIG. 3 is a schematic diagram of timing advance adjustment of uplink information. As shown in FIG. 3, when sending one piece of uplink information, the terminal device may perform timing advance adjustment relative to a time point of next piece of downlink information of the terminal device.

In a terrestrial network, after receiving a physical downlink shared channel (physical downlink shared channel, PDSCH) sent by the network device, the terminal device may send feedback information of the PDSCH, to feed back whether the PDSCH is successfully decoded. The feedback information is, for example, a hybrid automatic repeat request (hybrid automatic repeat request, HARQ) acknowledge character (acknowledge character, ACK) or non-acknowledge character (non-acknowledge character, NACK). If the terminal device receives the PDSCH in a downlink slot (slot) n, the terminal device may feed back the HARQ-ACK or the HARQ-NACK in an uplink slot n+K1. Alternatively, it is understood that if the network device needs to receive the HARQ-ACK or the HARQ-NACK in the uplink slot n+K1, a maximum amount of timing advance adjustment that can be performed by the LTE is a length of K1 slots. For example, a maximum value of K1 is 15. In this case, when a subcarrier spacing (subcarrier spacing, SCS) is 30 kHz, and a length of one slot is 0.5 ms, the maximum amount of timing advance TA adjustment that can be performed by the UE is 7.5 ms.

An altitude difference between the network device and the terminal device that are in the terrestrial network is not large, but an altitude difference between a network device and a terminal device that are in a non-terrestrial network NTN is large (which is usually greater than 500 km). Therefore, a round-trip transmission latency and a round-trip transmission latency difference of the terminal device in one beam/cell in the NTN are far greater than a round-trip transmission latency and a round-trip transmission latency difference of UE in the same cell in the terrestrial network. For example, when a diameter of a cell in a terrestrial cellular network is 350 km, a maximum round-trip transmission latency in the cell is 1.17 ms. However, when an orbit altitude of a satellite in the NTN is 600 km, and a diameter of a beam is 350 km, a communication elevation angle of the terminal device is 10 degrees, and a maximum round-trip transmission latency may reach about 13 ms. A large round-trip transmission latency in the NTN causes a large difference between the timing of the uplink information and the timing of the downlink information that are received on a side of the network device. Therefore, a value of an amount of timing advance adjustment performed on the uplink information in the NTN network is large.

4. Uplink (uplink, UP) gap (GAP)

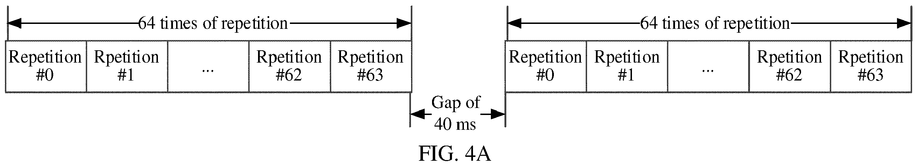

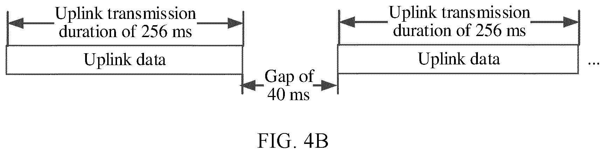

Due to a large quantity of repeated data, a gap that is inserted during uplink transmission in an NB-IoT is referred to as an UP GAP. During an UP GAP period, a terminal device switches to downlink to perform timing and frequency synchronization. A type of UP GAP is configured for all terminal devices, where {transmission duration, gap}={X, Y}. When all uplink transmission duration is greater than or equal to X, an uplink gap is inserted. Refer to FIG. 4A. For an NPRACH, {X, Y}={64*random access preamble sequence group duration, 40 ms}. Because a length of each random access preamble sequence group is determined by a symbol length and a CP length, duration of consecutive transmission changes with the CP length and the symbol length. Refer to FIG. 4B. For a narrowband physical uplink data channel (narrowband physical uplink shared channel, NPUSCH), {X, Y}={256 ms, 40 ms}. In comparison with the NPRACH, the NPUSCH is inserted with a gap based on fixed transmission duration.

5. Timing advance compensation

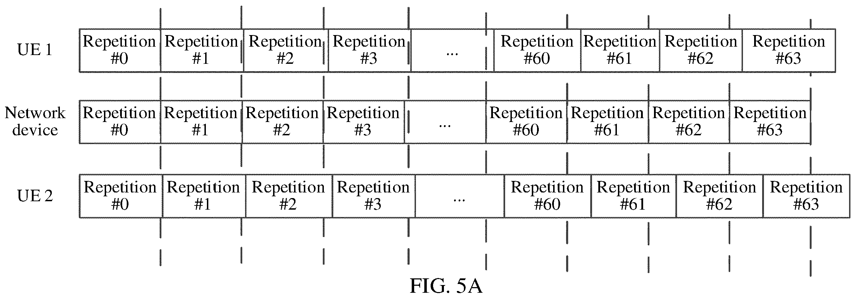

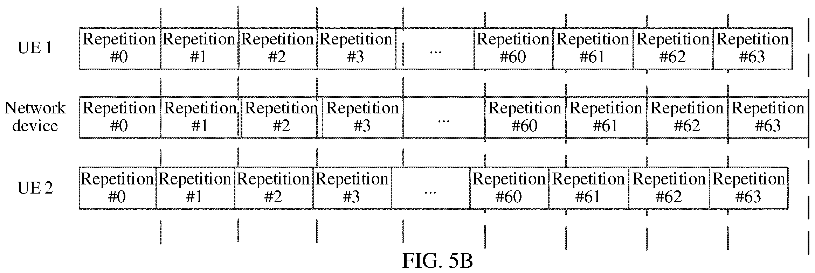

In a non-terrestrial network, long-time data transmission due to high mobility of a satellite may cause an increase or a decrease of a communication latency. Consequently, a large time offset and a large frequency offset are introduced to data received on a side of a network device. An example in which a terminal device sends a random access preamble is used. FIG. 5A shows a change of a positive timing advance TA produced by a satellite motion. Maximum timing advance TA drift that can be reached by 64 times of repetition is about 1200 Ts, where Ts represents a sampling time gap. FIG. 5B shows a change of a negative timing advance TA caused by a satellite motion. Maximum timing advance TA drift that can be reached by 64 times of repetition is about -1200 Ts. For an NPRACH, an NB-IoT requires a time synchronization precision of $\pm 80$ Ts.

Therefore, to avoid time drift, the terminal device needs to perform timing advance compensation, and re-determine a new timing advance TA value, to be used for next data transmission or a random access preamble sequence, so as to compensate for the time drift caused by the high mobility of the satellite.

6. In embodiments of this application, a plurality of gaps means two or more gaps. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although terms such as "first" and "second" may be used in embodiments of the present invention to describe objects, these objects are not limited by these terms. These terms are merely used to distinguish the objects from each other.

7. Terms "including", "having", and any other variant thereof mentioned in descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In a related technical solution, both a terminal device and a base station are static. Therefore, long-time data transmission does not cause large time drift. In a satellite communication system, a satellite has high mobility. Long-time data transmission may cause time drift of a timing offset TA value, and an error may exceed a tolerance of the system. As a result, deterioration of detection performance of an uplink signal or a detection failure is caused. Embodiments of this application provide a communication parameter indication method, to reduce and compensate for time drift caused by repeated transmission of random access and data transmission when satellite communication is applied to an NB-IoT or an IoT.

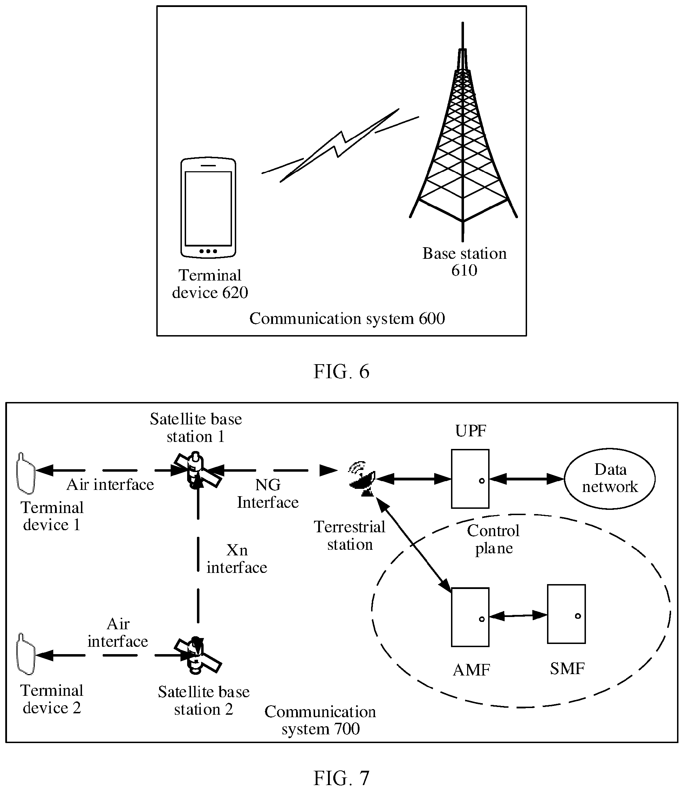

The communication parameter indication method provided in embodiments of this application may be applied to a communication system 600 shown in FIG. 6. The communication system 600 includes a base station 610 and a terminal device 620. In a specific implementation procedure of embodiments of this application, the terminal device 620 may include various handheld devices, vehicle-mounted devices, wearable devices or computing devices that have a wireless communication function, or other processing devices connected to a wireless modem. The terminal device may be a mobile station (Mobile Station, MS), a subscriber unit (subscriber unit), a cellular phone (cellular phone), a smartphone (smartphone), a wireless data card, a personal digital assistant (Personal Digital Assistant, PDA for short) computer, a tablet computer, a wireless modem (modem), a handheld device (handset), a laptop computer (laptop computer), a machine type communication (Machine Type Communication, MTC) terminal device, an uncrewed aerial vehicle, or the like, which is not limited. The base station 610 may be a terrestrial base station or a non-terrestrial base station. The terrestrial base station includes but is not limited to a base station on the ground and a base station in a high mountain or a water area. The non-terrestrial base station includes but is not limited to a satellite base station, a hot air balloon that can implement a function of the base station, and a high-altitude platform, which is also referred to as a flight platform, an uncrewed aerial vehicle, or the like. The base station provides a radio access service, schedules a radio resource for an access terminal, and provides a reliable radio transmission protocol, a reliable data encryption protocol, and the like. It should be noted that, during actual application, there may be one or more base stations and terminal devices. Quantities of base stations and terminal devices in the communication system shown in FIG. 6 are merely adaptive examples. These are not limited in this embodiment of this application.

The communication system may be a long term evolution (long term evolution, LTE) system that supports a fourth generation (fourth generation, 4G) access technology, a new radio (new radio, NR) system that supports a fifth generation (fifth generation, 5G) access technology, or a new radio vehicle-to-everything (vehicle-to-everything, NR V2X) system. The communication system may alternatively be applied to a system in hybrid networking of LTE and 5G, a device-to-device (device-to-device, D2D) communication system, a machine-to-machine (machine-to-machine, M2M) communication system, an internet of things (Internet of Things, IoT), an uncrewed aerial vehicle communication system, a communication system that supports a plurality of wireless technologies, for example, an LTE technology and an NR technology, or a non-terrestrial communication system, for example, a satellite communication system or a high-altitude communication platform. In addition, optionally, the communication system may alternatively be applied to a narrowband internet of things (Narrowband Internet of Things, NB-IoT) system, an enhanced data rate for GSM evolution (Enhanced Data rate for GSM Evolution, EDGE) system, a wideband code division multiple access (Wideband Code Division Multiple Access, WCDMA) system, a code division multiple access 2000 (Code Division Multiple Access 2000, CDMA 2000) system, a time division-synchronous code division multiple access (Time Division-Synchronous Code Division Multiple Access, TD-SCDMA) system, a long term evolution (Long Term Evolution, LTE) system, and a future-proofed communication technology.

The non-terrestrial communication system is used as an example for description. Refer to FIG. 7. An embodiment of this application further provides a communication system 700. The communication system includes a satellite base station, a terminal device, and a terrestrial station. The terminal device and the satellite base station may communicate with each other by using an air interface, and may access a satellite network by using the air interface, and initiate a service such as a call or internet access. The terrestrial station may be disposed on the ground. The satellite base station forwards a signal, so that the terminal device and the terrestrial station can communicate with each other. The satellite base station and the terrestrial station may communicate with each other by using an NG interface, and the terrestrial station is responsible for forwarding signaling and service data between the satellite base station and a core network. In addition, when the communication system includes a plurality of satellite base stations, the satellite base stations may communicate with each other by using an Xn interface, for example, exchanging handover-related signaling. A communication link between the satellite base station and the terminal device may be referred to as a service link, and a communication link between the satellite base station and the terrestrial station may be referred to as a feed link. For example, FIG. 7 shows one terrestrial station, two satellite base stations, which are a satellite base station 1 and a satellite base station 2, and two terminal devices, which are a terminal device 1 and a terminal device 2. The terminal device 1 and the satellite base station 1 communicate with each other by using the air interface, the satellite base station 1 and the terrestrial station communicates with each other by using the NG interface, the satellite base station 1 and the satellite base station 2 communicates with each other by using the Xn interface, and the satellite base station 2 and the terminal device 2 communicates with each other by using the air interface. The air interface may be various types of air interfaces, for example, a 5G air interface.

The terrestrial station may be any device having a wireless transceiver function, and is mainly configured to implement functions such as a radio physical control function, resource scheduling, radio resource management, radio access control, and mobility management, to provide a reliable radio transmission protocol, a reliable data encryption protocol, and the like. Specifically, the terrestrial station may alternatively be an access network device, may be a device supporting wired access, or may be a device supporting wireless access. For example, the terrestrial station may be an access network (access network, AN) /radio access network (radio access network, RAN) device, and includes a plurality of 5G-AN/5G-RAN nodes. The 5G-AN/5G-RAN node may be an access point (access point, AP), a NodeB (NodeB, NB), an enhanced NodeB (enhanced NodeB, eNB), a next-generation NodeB (NR NodeB, gNB), a transmission reception point (transmission reception point, TRP), a transmission point (transmission point, TP) or another access node. In addition, it should be noted that the terrestrial station may also be described as a gateway station. This is not limited in this embodiment of this application.

The satellite base station may also be another flight platform or referred to as a high-altitude platform, for example, an uncrewed aerial vehicle or a hot air balloon that can implement a base station function. For example, the flight platform may include a low-earth orbit satellite, a medium-earth orbit satellite, a geosynchronous orbit satellite, an unmanned flight system platform, and a high-earth orbit satellite based on an altitude of the flight platform. The satellite base station may transmit downlink data to a terminal, and may encode the downlink data by using channel coding, and the encoded downlink data is transmitted to the terminal after constellation modulation. The terminal may transmit uplink data to the satellite base station, or may encode the uplink data by using channel coding, and the encoded uplink data is transmitted to the satellite base station after constellation modulation.

In addition, the communication system 700 may further include a core network device and a data network (data network, DN). The terminal device may communicate with the data network by using the satellite base station, the terrestrial station, and the core network device.

The core network device may be configured to send, to the data network, data of the terminal device that is sent by the satellite base station/the terrestrial station. Specifically, the core network device may be configured to implement services such as user access control, mobility management, session management, user security authentication, and charging. The core network device may include a plurality of function units. For example, the core network device may be classified into a control plane function entity and a data plane function entity. The control plane function entity may include an access and mobility management unit (access and mobility management function, AMF), a session management unit (session management function, SMF), and the like. The data plane function entity may include a user plane unit (user plane function, UPF), and the like. For example, FIG. 7 shows the data plane function entity UPF and the control plane function entities AMF and SMF.

The access and mobility management unit is mainly responsible for work such as access authentication and mobility management of user equipment, and signaling interaction between functional network elements, for example, managing a registration status of a user, a connection status of the user, user registration and network access, tracking area update, user authentication during cell handover, and key security.

The session management unit may also be referred to as a session management function, a multicast/broadcast-service management function (multicast/broadcast-service management function, MB-SMF), a multicast session management network element, or the like. This is not limited. The session management network element is mainly configured to implement a user plane transmission logical channel, for example, a session management function such as establishment, release, and modification of a packet data unit (packet data unit, PDU) session.

The user plane unit may also be referred to as a PDU session anchor (PSA), a user plane function, or a multicast/broadcast user plane function (multicast/broadcast user plane function, MB-UPF). The user plane network element may be used as an anchor on a user plane transmission logical channel, and is mainly configured to complete functions such as routing and forwarding of user plane data. For example, the user plane network element establishes a channel (namely, the user plane transmission logical channel) to the terminal, forwards a data packet between the terminal and the DN on the channel, and is responsible for data packet filtering, data forwarding, rate control, generation of charging information, traffic data statistics, and the like for the terminal. A multicast/ broadcast (multicast/broadcast, MB) service controller (MB service controller) has service management functions such as group management, security management, and service announcement.

It should be noted that, in addition to the foregoing units, the core network device may further include a policy control unit (policy control function, PCF), an application function unit (application function, AF), and the like. This is not limited.

The data network may be a carrier network that provides a data transmission service for the terminal device, for example, a carrier network that may provide an IP multimedia service (IP multimedia service, IMS) for the terminal device. An application server (application server, AS) may be deployed in the DN, and the application server may provide the data transmission service for the terminal device.

The communication parameter indication method provided in embodiments of this application is applied to a long-distance communication scenario, for example, a satellite communication scenario or another long-distance communication scenario. This is not limited. Without loss of generality, the following uses an example in which the network device is a satellite for description.

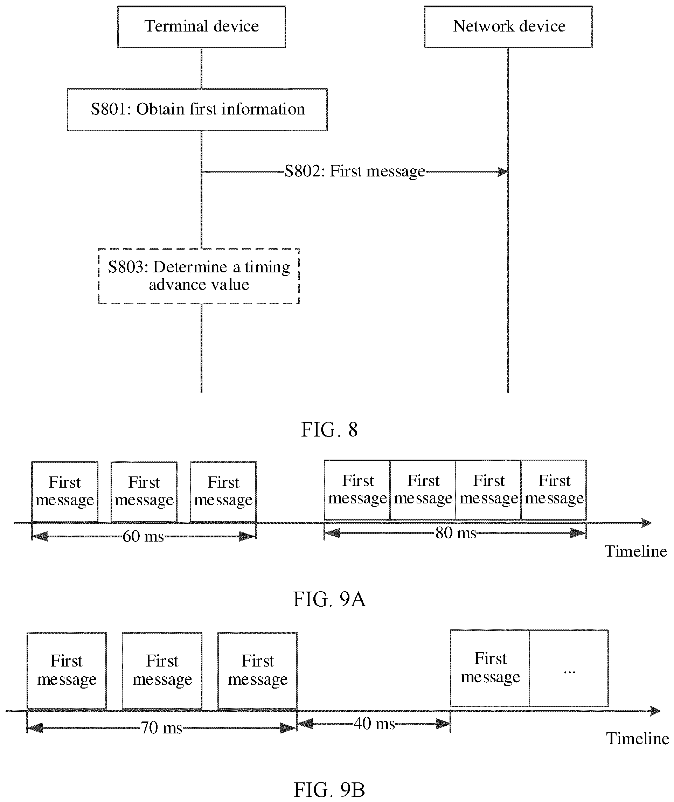

FIG. 8 is a schematic flowchart of a communication parameter indication method according to an embodiment of this application. The method may include the following operations.

S801: A terminal device obtains a first information.

The first information may indicate a quantity of time units of a first message. The first message may be at least one of a random access preamble (preamble) and uplink data. For example, the first information may indicate a quantity of time units of at least one of the uplink data and a random access preamble sequence.

In an example, the quantity of time units may be related to transmission duration of one-time consecutive transmission. The transmission duration may be maximum consecutive transmission duration of the first message. Refer to FIG. 9A. Assuming that the first information indicates that the quantity of time units of the first message is 60 ms, a maximum value of consecutive transmission duration of the first message by the terminal device is 60 ms, and the terminal device may stop transmitting the first message after 60 ms. Assuming that a next piece of first information indicates that the quantity of time units of the first message is 80 ms, the maximum value of consecutive transmission duration of the first message by the terminal device is 80 ms, and the terminal device may consecutively transmit the first message within 80 ms.

In another example, the quantity of time units may be related to a repetition count of one-time consecutive transmission. The repetition count may be a maximum consecutive repetition count of the first message. Refer to FIG. 9A. Assuming that the first information indicates that the quantity of time units of the first message is 3, a maximum value of the repetition count of consecutive transmission of the first message by the terminal device is 3, and the terminal device may stop transmitting the first message after 3 times of consecutive transmission. Assuming that a next piece of first information indicates that the quantity of time units of the first message is 4, the maximum value of the repetition count of consecutive transmission of the first message by the terminal device is 4.

Optionally, the transmission duration may also be related to the repetition count. For example, when sending the random access preamble sequence, the terminal device may convert the transmission duration into the repetition count. For example, if the transmission duration is 60 ms, the terminal device may determine the repetition count based on the 60 ms and one-time repeated transmission duration of each random access preamble sequence format shown in Table 1. For example, if one-time repetition duration of the random access preamble sequence in the format 0 is 5.6 ms, the terminal device may convert the transmission market 60 ms to a repetition count 10.

In an example, the first information may include one piece of transmission duration. The transmission duration may be used by the terminal device to transmit the random access preamble sequence. Maximum consecutive transmission duration in which the terminal device transmits the random access preamble sequence may be less than or equal to the foregoing transmission duration. Optionally, the one piece of transmission duration may also be used by the terminal device to transmit the uplink data. Maximum consecutive transmission duration in which the terminal device transmits the uplink data may be less than or equal to the foregoing quantity of time units. Optionally, the one piece of transmission duration may be used for both the random access preamble sequence and the uplink data.

In another example, the first information may include two pieces of transmission duration. For example, the first information may include at least one of first transmission duration and second transmission duration. The second transmission duration is used by the terminal device to transmit the random access preamble sequence, and the first transmission duration is used by the terminal device to transmit the uplink data. The maximum consecutive transmission duration in which the terminal device transmits the random access preamble sequence may be less than or equal to the second transmission duration, and the maximum consecutive transmission duration in which the terminal device transmits the uplink data may be less than or equal to the first transmission duration. The first transmission duration and the second transmission duration may be the same, or may be different.

Optionally, the second transmission duration may be a transmission duration set. The transmission duration set may include transmission duration corresponding to different formats of the random access preamble sequence. For example, the second transmission duration may include transmission duration $t_1$ corresponding to a format 0, transmission duration $t_2$ corresponding to a format 1, and transmission duration $t_3$ corresponding to a format 2.

In still another example, the first information may include at least one of the repetition count and the first transmission duration. The repetition count may be used to transmit the random access preamble sequence, and the first transmission duration may be used to transmit the uplink data. A maximum consecutive repetition count for transmitting the random access preamble sequence by the terminal device may be less than or equal to the foregoing repetition count, and the maximum consecutive transmission duration in which the terminal device transmits the uplink data may be less than or equal to the first transmission duration.

Optionally, the repetition count may be a repetition count set, and the repetition count set may include a repetition count corresponding to each format of the random access preamble sequence. For a random access preamble format, refer to the format 0, the format 1, and the format 2 shown in Table 1. For example, the first information includes a repetition count 8 corresponding to the format 0, a repetition count 6 corresponding to the format 1, and a repetition count 2 corresponding to the format 2. A maximum consecutive repetition count for transmitting the random access preamble sequence by the terminal device may be less than or equal to the repetition count corresponding to the random access preamble sequence format.

Optionally, the quantity of time units may alternatively be a timer (timer). For example, the first information may include a timer. The timer may be used by the terminal device to transmit the uplink data and/or the random access preamble sequence. Alternatively, the first information may include two timers. A first timer may be used by the terminal device to transmit the uplink data, and a second timer may be used by the terminal device to transmit the random access preamble sequence. Optionally, the second timer may be a timer set. The timer set includes a timer corresponding to each random access preamble sequence.

In an example, the first information may further include a transmission gap. The transmission gap may be a gap between two adjacent times of transmission of the first message. Refer to FIG. 9B. Assuming that the first information indicates that the transmission duration of the first message is 70 ms, the terminal device may consecutively transmit the first message within 70 ms. When the consecutive transmission duration of the first message reaches 70 ms, the terminal device may stop transmitting the first message. Assuming that the transmission gap is 40 ms, the terminal device may start to transmit the first message again after 40 ms. Optionally, when the terminal device starts to transmit the first message again, the first transmission duration of a previous first message may be used, or the terminal device may obtain the first information again.

The first information may be related to a relative speed between a satellite and the terminal device. A larger relative speed between the satellite and the terminal device indicates greater impact on timing advance TA. Therefore, the quantity of time units indicated by the first information is smaller. A smaller relative speed between the satellite and the terminal device indicates smaller impact on the timing advance TA. Therefore, the quantity of time units indicated by the first information is smaller.

The relative speed between the satellite and the terminal device may be determined based on related information of the satellite and related information of the terminal device. The related information of the satellite may include at least one of elevation angle information of the satellite and an ephemeris parameter of the satellite. The related information of the terminal device may include at least one of location information of a serving cell of the terminal device, location information of a serving beam of the terminal device, and location information of the terminal device. The following uses the ephemeris parameter as an example for description. Usually, issue of the ephemeris parameter may have two formats: (1) An ephemeris parameter used for communication parameter compensation (such as Doppler compensation and timing compensation) may include an orbital state, to be specific, three location parameters (x, y, z) and three speed parameters ($v_x$, $v_y$, $v_z$). The terminal device may determine the relative speed between the terminal device and the satellite based on at least one of the location parameter and the speed parameter.

(2) The ephemeris parameter used for satellite prediction includes the following six orbital parameters:

| | |
|---|---|
| $\sqrt{a}$ | Square root of semi major axis Square root of semi major axis |
| e | Eccentricity Eccentricity |
| $M_0$ | Mean anomaly at reference time Mean anomaly at reference time |
| $\Omega_0$ | Longitude of ascending node of orbit plane Longitude of ascending node of orbit plane |
| $i_0$ | Inclination angle at reference time Inclination angle of orbit plane |
| $\omega$ | Argument of perigee Argument of perigee |

The terminal device may determine relative location information between the satellite and the terminal device based on the location information of the terminal device and the location parameter of the satellite, to determine the relative speed between the terminal device and the satellite. In embodiments of this application, how to determine the relative speed between the satellite and the terminal device is not specifically limited.

The following describes a method for obtaining the first information. The method for obtaining the first information by the terminal device may include the following example 1 to example 4.

Example 1:

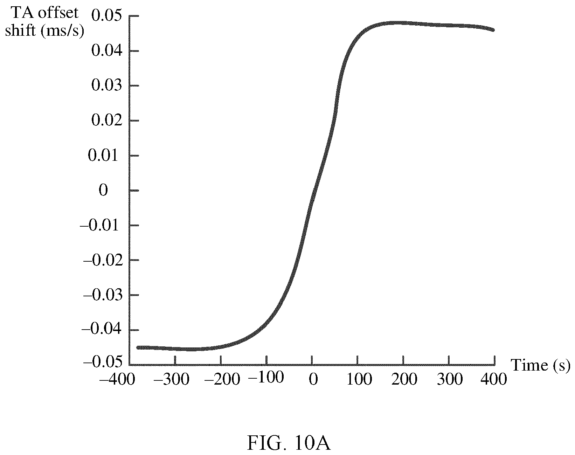

FIG. 10A is a diagram of an impact curve of an elevation angle of a satellite on timing advance TA. In FIG. 10A, a horizontal coordinate represents time, and a vertical coordinate represents impact on the timing advance TA. An elevation angle of the satellite varies at different time, and each time point may correspond to one elevation angle of one satellite. Impact of satellite motion on the timing advance TA is the most serious when the elevation angle of the satellite is small, that is, a change rate of a timing advance TA offset is the largest. When the satellite crosses the top (time points of -400 ms to -200 ms and 200 ms to 400 ms), a direction of the satellite is perpendicular to that of the terminal device, and the elevation angle of the satellite is the largest. It can be learned from FIG. 10A that when the elevation angle of the satellite is the largest, a change rate of the timing advance TA is the smallest. When the satellite is far away from a terminal device (time points of -200 ms to 200 ms), the change rate of the timing advance TA gradually increases.

It should be noted that an orbital altitude of the satellite in FIG. 10A is 600 km (km). When the orbital altitude of the satellite is constant, different elevation angles of the satellite have different impact on the timing advance TA. When the elevation angle of the satellite is constant, different orbital altitudes have different impact on the timing advance TA.

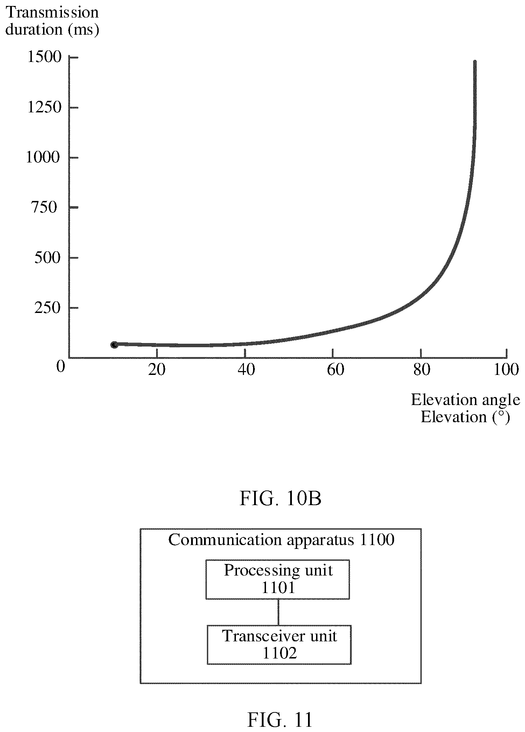

FIG. 10B is a diagram of a relationship between the elevation angle of the satellite and maximum consecutive transmission duration. In FIG. 10B, a horizontal coordinate is the elevation angle of the satellite, and a vertical coordinate is the maximum consecutive transmission duration. When the terminal device transmits uplink data or a random access preamble, if consecutive transmission duration is greater than the maximum consecutive transmission duration, a timing advance TA offset between the terminal device and the satellite exceeds an error requirement. As shown in FIG. 10B, when the elevation angle of the satellite is 10°, the maximum consecutive transmission duration of the terminal device is 52.4871 ms. In other words, when the elevation angle of the satellite is 10° and duration for which the terminal device transmits the uplink data or the random access preamble exceeds 52.4871 ms, the timing advance TA offset between the terminal device and the satellite exceeds error tolerance.

It should be noted that the orbital altitude of the satellite in FIG. 10B is 600 km (km). When the orbital altitude of the satellite is constant, the maximum consecutive transmission duration of the terminal device varies with different elevation angles of the satellite. When the elevation angle of the satellite is constant, the maximum consecutive transmission duration of the terminal device varies with different orbital altitudes.

It can be learned from FIG. 10A and FIG. 10B that, when the orbital altitude of the satellite is constant, a smaller elevation angle of the satellite has greater impact on the timing advance TA, and the maximum consecutive transmission duration of the terminal device is also the smallest. Therefore, a relationship between the orbital altitude of the satellite and the first information may be defined based on impact of a minimum elevation angle on the timing advance TA. A lower orbital altitude of the satellite indicates a smaller quantity of time units indicated by the first information.

In an example, a relationship between the orbital altitude of the satellite and a quantity of time units of the random access preamble sequence may be defined. One-time symbol group repetition duration of a random access preamble sequence 2 is the longest, and a quantity of time units corresponding to the random access preamble sequence 2 is the smallest. Therefore, a relationship between the orbital altitude of the satellite and the quantity of time units of the random access preamble sequence may be defined based on a minimum quantity of time units. When sending random access preamble sequences in different formats, the terminal device may use a same quantity of time units. For example, when the quantity of time units is the repetition count, if the orbital altitude of the satellite is 600 km, the repetition count of the random access preamble sequence may be 2, and if the orbital altitude of the satellite is 500 km, the repetition count of the random access preamble sequence may be 3.

In another example, a relationship between the orbital altitude of the satellite and the quantity of time units of the random access preamble sequences in different formats may be defined. A random access preamble sequence format 0 has shortest one-time symbol group repetition duration, and may correspond to a maximum quantity of time units. A random access preamble sequence format 2 has longest one-time symbol group repetition duration, and may correspond to a minimum quantity of time units.

The following uses an example in which the orbital altitude is 600 km and the quantity of time units is the repetition count for description. Table 2 defines repetition counts of random access preamble sequences in different formats.

**Table 2: Example of repetition counts of random access preamble sequences in different formats**

| Random access preamble format (preamble format) | Quantity of symbol groups | CP length | Sequence length | Duration for one-time repetition | repetition count |
|---|---|---|---|---|---|
| 0 | 4 | 2048 $T_s$ | 5.8192 $T_s$ | 5.6 ms | 8 times |
| 1 | 4 | 8192 $T_s$ | 5.8192 $T_s$ | 6.4 ms | 6 |
| 2 | 6 | 24576 $T_s$ | 3.24567 $T_s$ | 19.2 ms | 2 times |

It should be understood that Table 2 is merely an example, and does not constitute a limitation on the repetition count of the random access preamble sequence. It should be noted that a person skilled in the art may split Table 2, or may combine Table 2 with other information of the random access preamble sequence, to obtain a table that can define the repetition count of the random access preamble sequence. This is not limited to content shown in Table 2.

Optionally, a relationship between the orbital altitude of the satellite and transmission duration of a random access preamble sequence may also be defined. Optionally, the transmission duration may be related to the repetition count. For details, refer to related descriptions in S801.

In another example, a relationship between the orbital altitude of the satellite and a quantity of time units of uplink data may be defined. A lower orbital altitude of the satellite indicates a smaller quantity of time units of uplink data. For example, when the orbital altitude of the satellite is 600 km, the transmission duration of the uplink data may be 60 ms. When the orbital altitude of the satellite is 800 km, the transmission duration of the uplink data may be 80 ms. It should be understood that the foregoing quantity of time units of the uplink data is merely an example, and does not constitute a limitation on the orbital altitude of the satellite and the quantity of time units of the uplink data in embodiments of this application.

Optionally, a relationship between the orbital altitude of the satellite and the first information may be specified in a communication protocol.

In a possible implementation, the satellite may broadcast system information. The system information may include at least one of location information of the satellite and speed information of the satellite. The terminal device may determine orbital altitude information of the satellite based on the location information of the satellite and/or the speed information of the satellite. The terminal device may search for a corresponding first information based on the orbital altitude information of the satellite. For example, the terminal device may search a corresponding table based on the orbital altitude of the satellite, to determine the quantity of time units indicated by the first information. The terminal device may transmit the uplink data or the random access preamble sequence by using the quantity of time units.

Optionally, the satellite may broadcast configuration information of the random access preamble sequence. The configuration information may include a format and a time-frequency resource of the random access preamble sequence. The terminal device may determine the corresponding quantity of time units by searching a table based on the format of the random access preamble sequence configured for the satellite and determined orbital altitude information of the satellite.

In another possible implementation, after the terminal device accesses a network, the satellite may send the system information to the terminal device by using higher layer signaling. The terminal device may determine the orbital altitude information of the satellite based on the system information, and determine the corresponding first information by searching a table based on the orbital altitude of the satellite, to determine that the quantity of time units indicated by the first information may be used by the terminal device to transmit the uplink data. For example, after the terminal device accesses the network, the satellite may send the system information to the terminal device by using the higher layer signaling, and the terminal device may determine, based on the system information, corresponding transmission duration for transmitting the uplink data by searching a table.

The foregoing higher layer may be understood as a higher layer protocol layer, including at least one protocol layer above a physical layer: a medium access control (medium access control, MAC) layer, a radio link control (radio link control, RLC) layer, a packet data convergence protocol (packet data convergence protocol, PDCP) layer, a radio resource control (radio resource control, RRC) layer, and a non access-stratum (non-access stratum, NAS). Correspondingly, in embodiments of this application, the higher layer signaling may be NAS signaling, an RRC message, or a media access control (media access control, MAC) control element (control element, CE). RRC signaling may include dedicated RRC signaling or broadcast/multicast RRC signaling. This is not limited in embodiments of this application.

Based on the foregoing solution, the maximum consecutive transmission duration of the random access preamble sequence or the uplink data is specified based on the orbital altitude of the satellite, so that the timing advance offset caused by the satellite motion can be reduced, and data transmission performance can be improved.

Example 2:

A quantity of time units of a random access preamble sequence may be related to a relative location of a terminal device and a satellite. During a random access process, the terminal device initiates random access in an SSB with a strongest signal quality based on signal quality of the received SSB. SSBs in different directions have corresponding SSB indexes, as shown in FIG. 2B. Therefore, a relationship between the SSB index with a strongest signal quality and the quantity of time units of the random access preamble sequence may be defined when an orbital altitude is constant. For different orbital altitudes, there may be a same relationship between the SSB index and the quantity of time units of the random access preamble sequence. For example, for different orbital altitudes, the relationship between the SSB index at a lowest orbital altitude and the quantity of time units of the random access preamble sequence may be used.

Alternatively, different orbital altitudes may have different relationships between the SSB index and the quantity of time units of the random access preamble sequence. For example, one-time symbol group repetition duration of a random access preamble sequence 2 is the longest, and a quantity of time units corresponding to the random access preamble sequence 2 is the smallest. Therefore, the relationship between the SSB index with a strongest signal quality and the quantity of time units of the random access preamble sequence may be defined based on the minimum quantity of time units. When sending random access preamble sequences in different formats, the terminal device may use a same quantity of time units. For example, when the quantity of time units is a repetition count, if the SSB index with a strongest signal quality is 0, the repetition count of the random access preamble sequence may be 1. If the SSB index with a strongest signal quality is 1, the repetition count of the random access preamble sequence may be 2.

In another example, a relationship between the SSB index with a highest signal quality and a quantity of time units of random access preamble sequences in different formats may be defined. For example, a random access preamble sequence format 0 has shortest one-time symbol group repetition duration, and may correspond to a maximum quantity of time units. A random access preamble sequence format 2 has longest one-time symbol group repetition duration, and may correspond to a minimum quantity of time units.

Refer to Table 3. An example in which the orbital altitude is 600 km and the quantity of time units is the repetition count is used to describe the relationship between the SSB index with a strongest signal quality and the quantity of time units of the random access preamble sequence.

**Table 3: Example of the relationship between the SSB index with a strongest signal quality and the quantity of time units of the random access preamble sequence when the orbital altitude is 600 km**

| SSB Index (index) | Random access preamble (preamble) sequence repetition count | | |
|---|---|---|---|
| | Format 0 | Format 1 | Format 2 |
| 0 | 6 | 5 | 1 |
| 1 | 8 | 7 | 2 |
| 2 | 10 | 8 | 2 |
| 3 | 12 | 10 | 3 |
| ... | ... | ... | ... |

It should be understood that Table 3 is merely an example, and does not constitute a limitation on the repetition count of the random access preamble sequence. It should be noted that a person skilled in the art may split Table 3, or may combine Table 3 with other information of the random access preamble sequence, to obtain a table that can define the repetition count of the random access preamble sequence. This is not limited to content shown in Table 3.

The terminal device may listen to an SSB signal broadcast by the satellite. In satellite communication, coverage of the SSB may be in a narrow beam manner, and the SSB may be broadcast by scanning each beam coverage area. The terminal device may determine the SSB with a strongest signal quality, and obtain an SSB index. The terminal device may determine the repetition count of the random access preamble sequence corresponding to the SSB index. Optionally, the terminal device may determine the orbital altitude of the satellite based on an ephemeris parameter, and determine the corresponding repetition count of the random access preamble sequence based on the orbital altitude and the SSB index. Optionally, the terminal device may determine a format of the random access preamble sequence, and determine the repetition count corresponding to the format by searching a table.

Optionally, a relationship between the SSB index with a highest signal quality and transmission duration of the random access preamble sequence may be defined. Optionally, the transmission duration may be related to the repetition count. For details, refer to related descriptions in S801.

For a conversion relationship between the transmission duration and the repetition count, refer to related descriptions in S801. Details are not described herein again.

It should be noted that a relationship between the SSB index and the quantity of time units of the uplink data may also be defined. For details, refer to related descriptions of the relationship between the SSB index and the quantity of time units of the random access preamble sequence. Details are not described herein again. The terminal device may send the random access preamble sequence based on the determined quantity of time units of the random access preamble sequence, and the terminal device may send the uplink data based on the quantity of time units of the uplink data. Maximum consecutive transmission duration for sending the random access preamble sequence by the terminal device may be less than or equal to the quantity of time units of the random access preamble sequence, and maximum consecutive transmission duration for sending the uplink data by the terminal device may be less than or equal to the quantity of time units of the uplink data.

Optionally, the relationship between the SSB index and the quantity of time units of the random access preamble sequence, and the relationship between the SSB index and the quantity of time units of the uplink data may be specified in a communication protocol.

Based on the foregoing solution, the maximum consecutive repetition count of the random access preamble sequence and the quantity of time units of the uplink data may be determined based on the SSB index with a strongest signal quality, so that a timing advance TA offset caused by satellite motion can be reduced, a quantity of times that the terminal device with a small elevation angle of the satellite adjusts timing advance TA can be reduced, and random access latency can also be reduced.

Example 3:

In the foregoing example 1, a relationship between an orbital altitude of a satellite and a quantity of time units is defined based on impact of a minimum elevation angle on timing advance TA. In Example 3, a quantity of time units of a random access preamble sequence and a quantity of time units of uplink data may be determined based on the orbital altitude of the satellite and the elevation angle of the satellite.

Refer to FIG. 10B. It can be learned that the impact of the elevation angle of the satellite on the timing advance TA. The quantity of time units of the random access preamble sequence and the quantity of time units of the uplink data at different elevation angles are determined by maximum consecutive data transmission duration that can be accepted at different elevation angles. For example, the quantity of time units of the random access preamble sequence and the quantity of time units of the uplink data when the elevation angle of the satellite is 10 degrees are determined by the maximum consecutive transmission duration 52.4871 ms that can be accepted when the elevation angle of the satellite is 10 degrees. The quantity of time units of the random access preamble sequence and the quantity of time units of the uplink data when the elevation angle of the satellite is 20 degrees are determined by the maximum consecutive transmission duration 54.986 ms that can be accepted when the elevation angle of the satellite is 10 degrees.

It should be noted that, when a difference between the elevation angles of the satellite is not large, the maximum consecutive transmission duration does not change greatly. Therefore, a plurality of elevation intervals of the satellite may be defined. In different elevation angle intervals of the satellite, the quantity of time units of the random access preamble sequence and the quantity of time units of the uplink data are different. For different orbital altitudes, a same relationship between the elevation angle intervals of the satellite and the quantity of time units of the random access preamble sequence and the quantity of time units of the uplink data may be used.

Alternatively, different orbital altitudes may have different relationships between the elevation angle intervals of the satellite and the quantity of time units of the random access preamble sequence and the quantity of time units of the uplink data. One-time symbol group repetition duration of a random access preamble sequence 2 is the longest, and a quantity of time units corresponding to the random access preamble sequence 2 is the smallest. Therefore, the relationship between the elevation angle intervals of the satellite and the quantity of time units of the random access preamble sequence may be defined based on a minimum quantity of time units. Optionally, random access preamble sequences in different formats may have different quantities of time units.

Refer to Table 4. An example in which the orbital altitude of the satellite is 600 km and the quantity of time units is the repetition count is used for description. Table 4 shows the repetition count of the random access preamble sequences in different formats in different elevation angle intervals.

**Table 4: Example of the repetition count of the random access preamble sequences in different formats in different elevation angle intervals when the orbital altitude is 600 km**

| Random access preamble sequence format | Elevation angle ≤ 20° | 20° ≤ elevation angle < 40° | 40° ≤ elevation angle < 60° | 60° ≤ elevation angle < 80° | Elevation angle ≥ 80° |
|---|---|---|---|---|---|
| 0 | 8 | 9 | 10 | 17 | 34 |
| 1 | 6 | 8 | 9 | 15 | 29 |
| 2 | 2 | 2 | 3 | 5 | 9 |

It should be understood that Table 4 is merely an example, and does not constitute a limitation on the quantity of time units of the random access preamble sequence. It should be noted that a person skilled in the art may split Table 4, or may combine Table 4 with other information of the random access preamble sequence, to obtain a table that can define the repetition count of the random access preamble sequence. This is not limited to content shown in Table 4.

Optionally, a relationship between different elevation angle intervals and transmission duration of the random access preamble sequence may be defined. For a conversion relationship between the transmission duration and the repetition count, refer to related descriptions in S801. Details are not described herein again.

It should be noted that a relationship between the different elevation angle intervals and the quantity of time units of the uplink data may also be defined. For details, refer to related descriptions of the relationship between the different elevation angle intervals and the quantity of time units of the random access preamble sequence. Details are not described herein again. The terminal device may send the random access preamble sequence based on the determined quantity of time units of the random access preamble sequence, and the terminal device may send the uplink data based on the quantity of time units of the uplink data. Maximum consecutive transmission duration for sending the random access preamble sequence by the terminal device may be less than or equal to the quantity of time units of the random access preamble sequence, and maximum consecutive transmission duration for sending the uplink data by the terminal device may be less than or equal to the quantity of time units of the uplink data.

Optionally, a relationship between the different elevation angle intervals and the quantity of time units of the random access preamble sequence, and a relationship between the different elevation angle intervals and the quantity of time units of the uplink data may be specified in a communication protocol.

In a possible implementation, the terminal device may determine the elevation angle of the satellite based on location information of the terminal device and a satellite ephemeris parameter. For example, the terminal device may determine the elevation angle of the satellite based on an orbital status or six orbital parameters, and the location information of the terminal device. The terminal device may determine the quantity of time units of the random access preamble sequence and the quantity of time units of the uplink data by searching a table. Optionally, the terminal device may determine the orbital altitude of the satellite based on the ephemeris parameter, and determine the quantity of time units of the random access preamble sequence and the quantity of time units of the uplink data based on the orbital altitude and elevation angle of the satellite by searching a table. Optionally, the terminal device may determine a quantity of time units corresponding to a format of the random access preamble sequence used by the terminal device.

In another possible implementation, the satellite may broadcast beam information. The beam information may include coverage of a beam, a radius of the beam, elevation information of a center and an edge of each beam, and the like. The terminal device may determine the orbital altitude of the satellite based on the coverage of the beam and the location information of the terminal device. The terminal device may determine the quantity of time units of the random access preamble sequence and the quantity of time units of the uplink data based on the elevation angle of the satellite, or the elevation angle of the satellite and the orbital altitude of the satellite by searching a table.

Based on the foregoing solution, a maximum consecutive repetition count of the random access preamble sequence and the quantity of time units of the uplink data may be determined based on different elevation angles of the satellite, so that a timing advance TA offset caused by satellite motion can be reduced.

Example 4:

A quantity of time units of a random access preamble sequence and a quantity of time units of uplink data are related to a relative speed between a terminal device and a satellite. Therefore, first information in Example 4 may be indicated by the satellite to the terminal device.

In an example, the first information may be at a cell level. The satellite may determine the quantity of time units of the random access preamble sequence and the quantity of time units of the uplink data based on a minimum elevation angle of a cell. The minimum elevation angle of the cell may be determined by the satellite based on coverage of the cell and location information of the satellite. An elevation angle of the satellite of the terminal device in the cell is greater than or equal to the minimum elevation angle of the cell. The satellite may broadcast the determined quantity of time units of the random access preamble sequence. Optionally, the satellite may broadcast quantities of time units respectively corresponding to different formats of the random access preamble sequence.

Optionally, the satellite may alternatively broadcast the quantity of time units of the uplink data. Alternatively, after the terminal device accesses a network, the satellite may indicate the quantity of time units of the uplink data to the terminal device by using higher layer signaling. For a manner of indicating the quantity of time units of the uplink data to the terminal device by using the higher layer signaling, refer to related descriptions in S801. Details are not described herein again.

In another example, the first information may be at a beam level. The satellite may broadcast beam information. The beam information may include coverage of a beam, a radius of the beam, elevation information of each beam, and the like. The terminal device may determine, based on the beam information broadcast by the satellite, the beam index of the beam on which the terminal device is located.

The satellite may broadcast the quantity of time units of the random access preamble sequence corresponding to at least one beam index. For example, the satellite may broadcast the quantity of time units of the random access preamble sequence corresponding to each beam index. The terminal device may determine, based on the index of the beam in which the terminal device is located, the quantity of time units of the corresponding random access preamble sequence. Optionally, the satellite may broadcast quantities of time units corresponding to different formats of the random access preamble sequence in each beam index. The terminal device may determine the corresponding quantity of time units based on the beam index of the beam on which the terminal device is located and the format of the random access preamble sequence used by the terminal device.

Alternatively, the satellite may broadcast, in one beam, the quantity of time units of the random access preamble sequence corresponding to the beam index. Optionally, the satellite may broadcast, in one beam, quantities of time units corresponding to different formats of the random access preamble sequence corresponding to the beam index.

Optionally, the satellite may broadcast the quantity of time units of the uplink data corresponding to at least one beam index, or the satellite may broadcast, in one beam, the quantity of time units of the uplink data corresponding to the beam index. Alternatively, the quantity of time units of the uplink data may be sent by the satellite to the terminal device by using the higher layer signaling after the terminal device accesses the network. For a manner of indicating the quantity of time units of the uplink data to the terminal device by using the higher layer signaling, refer to related descriptions in Example 1. Details are not described herein again.

In another example, the first information may be at a terminal level. The satellite can configure the quantity of time units at a terminal device level for the terminal device. For example, the satellite can configure the quantity of time units at the terminal device level for the terminal device by using RRC signaling, a MAC CE, or downlink control information (downlink control information, DCI). Optionally, the satellite may alternatively configure the quantity of time units at the terminal device level by using a combination of signaling such as RRC signaling, a MAC CE, and DCI.

In a possible case, the satellite may configure the quantity of time units at the terminal device level for the terminal device through direct indication. For example, when maximum consecutive transmission duration is 16 ms, the satellite directly indicates 16, and the time unit length is ms (or a slot). In another possible case, the satellite may implicitly indicate the quantity of time units at the terminal device level. For example, the satellite may indicate an index to the terminal device, and the terminal device may determine a quantity of time units corresponding to the index by searching a table.

S802: The terminal device sends a first message based on the first information, and a corresponding satellite obtains the first message.

When the terminal device sends the first message, maximum consecutive transmission duration of the first message should be less than or equal to a quantity of time units indicated by the first information, as shown in FIG. 9A.

Optionally, the satellite may alternatively determine the first information of the terminal device in the manner indicated in Example 1 to Example 4. The satellite may obtain the first message based on the first information of the terminal device.

Optionally, after duration for sending the first message by the terminal device reaches the quantity of time units indicated by the first information, the terminal device may perform the following operations.

S803. The terminal device determines a timing advance value.

The timing advance TA value is used by the terminal device to transmit the uplink data or the random access preamble sequence next time. Refer to FIG. 9A. The terminal device consecutively sends the uplink data within 60 ms. When the time for sending the uplink data reaches 60 ms, the terminal device may stop sending the uplink data, and determine one timing advance TA value. The timing advance TA value may be used by the terminal device to transmit next uplink data, as shown in FIG. 9A. In other words, the terminal device may send the uplink data by using the determined timing advance TA value within 80 ms. The timing advance TA value may change due to movement of the satellite. Therefore, the timing advance TA value determined by the terminal device may be different from a timing advance TA value used for last sending of the random access preamble sequence or the uplink data.

Optionally, the terminal device may determine a timing advance TA compensation value. The compensation value may be a difference between the timing advance TA value used for next transmission of the uplink data or the random access preamble sequence and the timing advance TA value used for last transmission of the uplink data or the random access preamble sequence. Refer to FIG. 9A. The timing advance TA compensation value may be a difference between a timing advance TA value used when the terminal device transmits the first message within 60 ms and a timing advance TA value used when the terminal device transmits the first message within 80 ms.

The terminal device may determine the timing advance TA value in a transmission gap included in the first information. Optionally, the transmission gap may alternatively be sent by the satellite to the terminal device by using the higher layer signaling after the terminal device accesses the network.

Based on the foregoing solution, time drift is caused by long-time data transmission and satellite movement. Therefore, the first information indicates a quantity of time units of the first message, and the terminal device may perform timing advance TA compensation when the quantity of time units indicated by the first information is met for transmitting the first message, so that data transmission performance can be improved.

Based on a same concept, refer to FIG. 11. An embodiment of this application provides a communication apparatus 1100. The apparatus 1100 includes a processing unit 1101 and a transceiver unit 1102. The apparatus 1100 may be a terminal device, or may be an apparatus that is applied to the terminal device and that can support the terminal device to perform a communication parameter indication method. Alternatively, the apparatus 1100 may be a network device, or may be an apparatus that is applied to the network device and that can support the network device to perform the communication parameter indication method.

The transceiver unit may also be referred to as a transceiver module, a transceiver, a transceiver machine, a transceiver apparatus, or the like. The processing unit may also be referred to as a processor, a processing board, a processing unit, a processing apparatus, or the like. Optionally, a component configured to implement a receiving function in the transceiver unit may be considered as a receiving unit. It should be understood that the transceiver unit is configured to perform a sending operation and a receiving operation on a side of the terminal device or a side of the network device in the foregoing method embodiments. A component configured to implement a sending function in the transceiver unit is considered as a sending unit. In other words, the transceiver unit includes the receiving unit and the sending unit. When the apparatus 1100 is applied to the terminal device, the receiving unit included in the transceiver unit 1102 of the apparatus 1100 is configured to perform a receiving operation on the side of the terminal device, for example, obtaining first information, and specifically, receiving the first information from the network device. The sending unit included in the transceiver unit 1102 of the apparatus 1100 is configured to perform a sending operation on the side of the terminal device, for example, sending a first message, and specifically, sending the first message to the network device. When the apparatus 1100 is applied to the network device, the sending unit included in the transceiver unit 1102 of the apparatus 1100 is configured to perform a sending operation on the side of the network device, for example, sending the first information, and specifically, sending the first information to the terminal device. The receiving unit included in the transceiver unit 1102 of the apparatus 1100 is configured to perform a sending operation on the side of the network device, for example, obtaining the first message is obtained, and specifically, receiving the first message from the terminal device. In addition, it should be noted that if the apparatus is implemented by using a chip/chip circuit, the transceiver unit may be an input/output circuit and/or a communication interface, to perform an input operation (corresponding to the foregoing receiving operation) and an output operation (corresponding to the foregoing sending operation). The processing unit is an integrated processor, a microprocessor, or an integrated circuit.

The following describes in detail an implementation in which the apparatus 1100 is applied to the terminal device or the network device.

For example, operations performed by units of the apparatus 1100 applied to the terminal device are described in detail.

The transceiver unit 1102 is configured to obtain the first information, where the first information indicates a quantity of time units of the first message, and the first information is related to a relative speed between the network device and the terminal device. The processing unit 1101 is configured to generate the first message based on the first information. The transceiver unit 1102 is further configured to send the first message. For the first information, refer to related descriptions of the method embodiment shown in FIG. 8. Details are not described herein again.

For example, operations performed by units of the apparatus 1100 applied to the network device are described in detail.

The processing unit 1101 is configured to generate the first information, where the first information indicates a quantity of time units of the first message, and the first information is related to a relative speed between the network device and the terminal device. The transceiver unit 1102 is configured to send the first information. The transceiver unit 1102 is further configured to obtain the first message. For the first information, refer to related descriptions of the method embodiment shown in FIG. 8. Details are not described herein again.

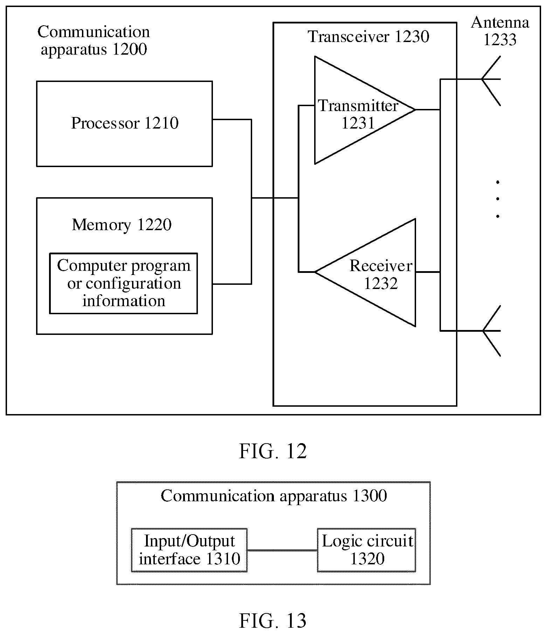

Based on the same concept, as shown in FIG. 12, an embodiment of this application provides a communication apparatus 1200. The communication apparatus 1200 may be a chip or a chip system. Optionally, in this embodiment of this application, the chip system may include a chip, or may include the chip and another discrete device.

The communication apparatus 1200 may include at least one processor 1210. The processor 1210 is coupled to a memory. Optionally, the memory may be located inside the apparatus, or may be located outside the apparatus. For example, the communication apparatus 1200 may further include at least one memory 1220. The memory 1220 stores a computer program, configuration information, a computer program or instructions, and/or data that are necessary for implementing any one of the foregoing embodiments. The processor 1210 may execute the computer program stored in the memory 1220, to complete the method in any one of the foregoing embodiments.

The coupling in this embodiment of this application may be an indirect coupling or a communication connection between apparatuses, units, or modules in an electrical form, a mechanical form, or another form, and is used for information exchange between the apparatuses, the units, or the modules. The processor 1210 may perform a cooperative operation with the memory 1220. A connection medium between the transceiver 1230, the processor 1210, and the memory 1220 is not limited in this embodiment of this application.

The communication apparatus 1200 may further include the transceiver 1230, and the communication apparatus 1200 may exchange information with another device by using the transceiver 1230. The transceiver 1230 may be a circuit, a bus, a transceiver, or any other apparatus that can be configured to exchange information, or may be referred to as a signal transceiver unit. As shown in FIG. 12, the transceiver 1230 includes a transmitter 1231, a receiver 1232, and an antenna 1233. In addition, when the communication apparatus 1200 is a chip-type apparatus or circuit, the transceiver in the communication apparatus 1200 may alternatively be an input/output circuit and/or a communication interface, and may input data (or referred to as receiving data) and output data (or referred to as sending data). The processor is an integrated processor, a microprocessor, or an integrated circuit, and the processor may determine the output data based on the input data.

In a possible implementation, the communication apparatus 1200 may be applied to a terminal device. Specifically, the communication apparatus 1200 may be a terminal device, or may be an apparatus that can support the terminal device to implement a function of the terminal device in any one of the foregoing embodiments. The memory 1220 stores the computer program, the computer program or instructions, and/or the data that are necessary for implementing the function of the terminal device in any one of the foregoing embodiments. The processor 1210 may execute the computer program stored in the memory 1220, to complete the method performed by the terminal device in any one of the foregoing embodiments. When the communication apparatus 1200 is applied to the terminal device, the transmitter 1231 in the communication apparatus 1200 may be configured to send transmission control configuration information to the network device by using the antenna 1233, and the receiver 1232 may be configured to receive transmission information sent by the network device by using the antenna 1233.

In a possible implementation, the communication apparatus 1200 may be applied to a network device. Specifically, the communication apparatus 1200 may be a network device, or may be an apparatus that can support the network device to implement a function of the network device in any one of the foregoing embodiments. The memory 1220 stores the computer program, the computer program or instructions, and/or the data that are necessary for implementing the function of the network device in any one of the foregoing embodiments. The processor 1210 may execute the computer program stored in the memory 1220, to complete the method performed by the network device in any one of the foregoing embodiments. When the communication apparatus 1200 is applied to the network device, the receiver 1232 in the communication apparatus 1200 may be configured to receive the transmission control configuration information sent by the terminal device by using the antenna 1233, and the transmitter 1231 may be configured to send the transmission information to the terminal device by using the antenna 1233.

The communication apparatus 1200 provided in this embodiment may be applied to the terminal device to complete the method performed by the terminal device, or may be applied to the network device to complete the method performed by the network device. Therefore, for technical effects that can be achieved by the communication apparatus 1200, refer to the foregoing method embodiments. Details are not described herein again.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor or any conventional processor, or the like. The steps of the method disclosed with reference to embodiments of this application may be directly performed by a hardware processor, or may be performed by using a combination of hardware in the processor and a software module.

In this embodiment of this application, the memory may be a nonvolatile memory, a hard disk drive (hard disk drive, HDD) or a solid-state drive (solid-state drive, SSD), or may be a volatile memory (volatile memory), for example, a random access memory (random access memory, RAM). The memory may alternatively be any other medium that can be configured to carry or store expected program code in a form of an instruction or a data structure and that can be accessed by a computer. This is not limited thereto. The memory in this embodiment of this application may alternatively be a circuit or any other apparatus that can implement a storage function, and is configured to store the computer program, the computer program or instructions, and/or the data.

Based on the foregoing embodiments, refer to FIG. 13. An embodiment of this application further provides another communication apparatus 1300, including an input/output interface 1310 and a logic circuit 1320. The input/output interface 1310 is configured to receive code instructions and transmit the code instructions to the logic circuit 1320. The logic circuit 1320 is configured to run the code instructions to perform the method performed by the terminal device or the method performed by the network device in any one of the foregoing embodiments.

The following describes in detail operations performed by the communication apparatus applied to the terminal device or the network device.

In an optional implementation, the communication apparatus 1300 may be applied to the terminal device, to perform the method performed by the terminal device. Specifically, for example, the method performed by the terminal device in the foregoing Example 1 to Example 4 may be performed. The input/output interface 1310 is configured to input first information, where the first information indicates a quantity of time units of a first message, and the first information is related to a relative speed between the network device and the terminal device. The logic circuit 1320 is configured to generate the first message based on the first information. The input/output interface 1310 is further configured to output the first message.

In another optional implementation, the communication apparatus 1300 may be applied to a network device, to perform the method performed by the network device. Specifically, for example, the method performed by the network device in the foregoing solution 1 may be performed. The logic circuit 1320 is configured to generate first information, where the first information indicates a quantity of time units of a first message, and the first information is related to a relative speed between the network device and the terminal device. The input/output interface 1310 is configured to output the first information. The input/output interface 1310 is further configured to input the first message.

The communication apparatus 1300 provided in this embodiment may be applied to the terminal device to perform the method performed by the terminal device, or may be applied to the network device to perform the method performed by the network device. Therefore, for technical effects that can be achieved by the communication apparatus 1300, refer to the foregoing method embodiments. Details are not described herein again.

Based on the foregoing embodiments, an embodiment of this application further provides a communication system. The communication system includes at least one communication apparatus applied to a terminal device and at least one communication apparatus applied to a network device. For technical effects that can be achieved by the communication system, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the terminal device or the method performed by the network device in any one of the foregoing embodiments is implemented. The computer-readable storage medium may include any medium that can store program code, such as a USB flash drive, a removable hard disk drive, a read-only memory, a random access memory, a magnetic disk, or an optical disc.

To implement the functions of the communication apparatuses in FIG. 11 to FIG. 13, an embodiment of this application further provides a chip, including a processor. The chip is configured to support the communication apparatus to implement a function of a transmitting end or a receiving end in the foregoing method embodiments. In a possible design, the chip is connected to a memory or the chip includes the memory. The memory is configured to store program instructions and data that are necessary for the communication apparatus.

A person skilled in the art should understand that embodiments of this application may be provided as a method, a system, or a computer program product. Therefore, this application may use a form of hardware-only embodiments, software-only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It can be understood that computer program or instructions may be used to implement each procedure and/or each block in the flowcharts and/or the block diagrams and a combination of procedures and/or blocks in the flowcharts and/or the block diagrams. These computer program or instructions may be provided for a general-purpose computer, a special-purpose computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program or instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program or instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to embodiments of this application without departing from the scope of embodiments of this application. Embodiments of this application is intended to cover these modifications and variations provided that they fall within the scope of protection defined by the following claims and their equivalent technologies.

**Claims**

1. A communication parameter indication method, comprising:

   obtaining, by a terminal device, first information, wherein the first information indicates a quantity of time units of a first message, and the first information is related to a relative speed between a network device and the terminal device; and
   sending, by the terminal device, the first message based on the quantity of time units.

2. The method according to claim 1, wherein the obtaining, by a terminal device, first information comprises:
   obtaining, by the terminal device, the first information corresponding to an index of a beam in which the terminal device is located.

3. The method according to claim 1 or 2, wherein the obtaining, by a terminal device, first information comprises:
   obtaining, by the terminal device, the first information corresponding to an index of a synchronization signal block SSB used during random access.

4. A communication parameter indication method, comprising:

sending, by a network device, first information, wherein the first information indicates a quantity of time units of a first message, and the first information is related to a relative speed between the network device and a terminal device; and
obtaining, by the network device, the first message.

5. The method according to claim 4, wherein the sending, by a network device, first information comprises:
sending, by the network device, the first information corresponding to an index of a beam.

6. The method according to any one of claims 1 to 5, wherein the quantity of time units is related to a repetition count or transmission duration, the repetition count is a maximum consecutive repetition count of the first message, and the transmission duration is maximum consecutive transmission duration of the first message.

7. The method according to claim 6, wherein the transmission duration is related to the repetition count.

8. The method according to claim 6 or 7, wherein the first message comprises at least one of uplink data and a random access preamble; and

when the first message comprises the uplink data, the first information comprises first transmission duration;
when the first message comprises the random access preamble, the first information comprises second transmission duration; or
when the first message comprises the uplink data and the random access preamble, the first information comprises the first transmission duration and the second transmission duration, wherein
the first transmission duration is maximum consecutive transmission duration of the uplink data, and the second transmission duration is maximum consecutive transmission duration of the random access preamble.

9. The method according to claim 6 or 7, wherein the first message comprises at least one of uplink data and a random access preamble; and

when the first message comprises the uplink data, the first information comprises first transmission duration;
when the first message comprises the random access preamble, the first information comprises the repetition count; or
when the first message comprises the uplink data and the random access preamble, the first information comprises the repetition count and the first transmission duration, wherein
the repetition count is a maximum consecutive repetition count of the random access preamble, and the first transmission duration is maximum consecutive transmission duration of the uplink data.

10. The method according to any one of claims 1 to 8, wherein the first information further comprises a transmission gap, and the transmission gap is a gap between two adjacent times of transmission of the first message.

11. The method according to any one of claims 1 to 9, wherein the first information is at a cell level, or the first information is at a beam level.

12. The method according to any one of claims 1 to 11, wherein the relative speed is determined based on a first parameter and a second parameter, wherein

the first parameter comprises at least one of the following: elevation information of the network device or an ephemeris parameter of the network device; and
the second parameter comprises at least one of the following: location information of a serving cell of the terminal device, location information of a serving beam of the terminal device, or location information of the terminal device.

13. A communication apparatus, comprising a processing unit and a transceiver unit, wherein

the transceiver unit is configured to obtain first information, wherein the first information indicates a quantity of time units of a first message, and the first information is related to a relative speed between a network device and a terminal device;
the processing unit is configured to generate the first message based on the first information; and
the transceiver unit is further configured to send the first message.

14. The communication apparatus according to claim 13, wherein the processing unit is specifically configured to: obtain the first information corresponding to an index of a beam in which the communication apparatus is located.

15. The communication apparatus according to claim 13 or 14, wherein the processing unit is specifically configured to: obtain first information corresponding to an index of a synchronization signal block SSB used during random access.

16. A communication apparatus, comprising a processing unit and a transceiver unit, wherein the processing unit is configured to generate first information, wherein the first information indicates a quantity of time units of a first message, and the first information is related to a relative speed between a network device and a terminal device;

    the transceiver unit is configured to send the first information; and
    the transceiver unit is further configured to obtain the first message.

17. The communication apparatus according to claim 16, wherein the transceiver unit is specifically configured to: send first information corresponding to an index of a beam.

18. The communication apparatus according to any one of claims 13 to 17, wherein the quantity of time units is related to a repetition count or transmission duration, the repetition count is a maximum consecutive repetition count of the first message, and the transmission duration is maximum consecutive transmission duration of the first message.

19. The communication apparatus of claim 18, wherein the transmission duration is related to the repetition count.

20. The communication apparatus according to claim 17 or 18, wherein the first message comprises at least one of uplink data and a random access preamble; and

    when the first message comprises the uplink data, the first information comprises first transmission duration;
    when the first message comprises the random access preamble, the first information comprises second transmission duration; or
    when the first message comprises the uplink data and the random access preamble, the first information comprises the first transmission duration and the second transmission duration, wherein
    the first transmission duration is maximum consecutive transmission duration of the uplink data, and the second transmission duration is maximum consecutive transmission duration of the random access preamble.

21. The communication apparatus according to claim 17 or 18, wherein the first message comprises at least one of uplink data and a random access preamble; and

    when the first message comprises the uplink data, the first information comprises first transmission duration;
    when the first message comprises the random access preamble, the first information comprises the repetition count; or
    when the first message comprises the uplink data and the random access preamble, the first information comprises the repetition count and the first transmission duration, wherein
    the repetition count is a maximum consecutive repetition count of the random access preamble, and the first transmission duration is maximum consecutive transmission duration of the uplink data.

22. The communication apparatus according to any one of claims 13 to 21, wherein the first information further comprises a transmission gap, and the transmission gap is a gap between two adjacent times of transmission of the first message.

23. The communication apparatus according to any one of claims 13 to 22, wherein the first information is at a cell level, or the first information is at a beam level.

24. The communication apparatus according to any one of claims 13 to 23, wherein the relative speed is determined based on a first parameter and a second parameter, wherein

    the first parameter comprises at least one of the following: elevation information of the network device or an ephemeris parameter of the network device; and
    the second parameter comprises at least one of the following: location information of a serving cell of the terminal device, location information of a serving beam of the terminal device, or location information of the terminal device.

25. A communication apparatus, comprising at least one processor, wherein the processor is coupled to a memory;

the memory is configured to store a computer program or instructions; and
the processor is configured to execute the computer program or the instructions, to implement the method according to any one of claims 1 to 12.

26. A communication apparatus, comprising a logic circuit and an input/output interface, wherein

the input/output interface is configured to input first information, wherein the first information indicates a quantity of time units of a first message, and the first information is related to a relative speed between a network device and a terminal device;
the logic circuit is configured to generate the first message based on the first information, and is configured to perform the method according to any one of claims 1 to 12; and
the input/output interface is further configured to output the first message.

27. A communication apparatus, comprising a logic circuit and an input/output interface, wherein

the logic circuit is configured to generate first information, wherein the first information indicates a quantity of time units of a first message, the first information is related to a relative speed between a terminal device a network device, and the logic circuit is configured to perform the method according to any one of claims 1 to 12;
the input/output interface is configured to output the first information; and
the input/output interface is further configured to input the first message.

28. A computer-readable storage medium, wherein the computer-readable storage medium stores a computer program or instructions, and when the instructions are run on a computer, the method according to any one of claims 1 to 12 is implemented.

29. A computer program product, comprising computer-executable instructions, wherein when the computer-executable instructions are run on a computer, the computer is enabled to perform the method according to any one of claims 1 to 12.

Short CP

| CP | Symbol #0 | Symbol #1 | Symbol #2 | Symbol #3 | Symbol #4 |
|---|---|---|---|---|---|

$\leftarrow$ 66.7 μs $\rightarrow$     $\leftarrow$266.7 μs$\rightarrow$

Long CP

| CP | Symbol #0 | Symbol #1 | Symbol #2 | Symbol #3 | Symbol #4 |
|---|---|---|---|---|---|

$\leftarrow$266.7 μs$\rightarrow$     $\leftarrow$266.7 μs$\rightarrow$

Enhanced CP

| CP | Symbol #0 | Symbol #1 | Symbol #2 |
|---|---|---|---|

$\leftarrow$800 μs$\rightarrow$     $\leftarrow$800 μs$\rightarrow$

FIG. 1A

FIG. 1B

FIG. 2A

FIG. 2B

FIG. 3

| ← 64 times of repetition → | | | | | | ← 64 times of repetition → | | | | |
|---|---|---|---|---|---|---|---|---|---|---|
| Repetition #0 | Rpetition #1 | ··· | Rpetition #62 | Rpetition #63 | | Repetition #0 | Rpetition #1 | ··· | Rpetition #62 | Rpetition #63 |

Gap of 40 ms

FIG. 4A

FIG. 4B

| UE 1 | Repetition #0 | Repetition #1 | Repetition #2 | Repetition #3 | ... | Repetition #60 | Repetition #61 | Repetition #62 | Repetition #63 |

| Network device | Repetition #0 | Repetition #1 | Repetition #2 | Repetition #3 | ... | Repetition #60 | Repetition #61 | Repetition #62 | Repetition #63 |

| UE 2 | Repetition #0 | Repetition #1 | Repetition #2 | Repetition #3 | ... | Repetition #60 | Repetition #61 | Repetition #62 | Repetition #63 |

FIG. 5A

| | | | | | | | | |
|---|---|---|---|---|---|---|---|---|
| UE 1 | Repetition #0 | Repetition #1 | Repetition #2 | Repetition #3 | ... | Repetition #60 | Repetition #61 | Repetition #62 | Repetition #63 |

| | | | | | | | | |
|---|---|---|---|---|---|---|---|---|
| Network device | Repetition #0 | Repetition #1 | Repetition #2 | Repetition #3 | ... | Repetition #60 | Repetition #61 | Repetition #62 | Repetition #63 |

| | | | | | | | | |
|---|---|---|---|---|---|---|---|---|
| UE 2 | Repetition #0 | Repetition #1 | Repetition #2 | Repetition #3 | ... | Repetition #60 | Repetition #61 | Repetition #62 | Repetition #63 |

FIG. 5B

FIG. 6

FIG. 7

FIG. 8

FIG. 9A

FIG. 9B

FIG. 10A

Transmission duration (ms)

Elevation angle
Elevation (°)

FIG. 10B

Communication apparatus 1100

Processing unit
1101

Transceiver unit
1102

FIG. 11

Communication
apparatus 1200

Transceiver 1230

Antenna
1233

Processor 1210

Transmitter
1231

Memory 1220

Computer program
or configuration
information

Receiver
1232

FIG. 12

Communication apparatus 1300

Input/Output
interface 1310

Logic circuit
1320

FIG. 13

## INTERNATIONAL SEARCH REPORT

| | International application No. |
|---|---|
| | **PCT/CN2022/087392** |

**A. CLASSIFICATION OF SUBJECT MATTER**

H04W 28/02(2009.01)i

According to International Patent Classification (IPC) or to both national classification and IPC

**B. FIELDS SEARCHED**

Minimum documentation searched (classification system followed by classification symbols)

H04W H04Q

Documentation searched other than minimum documentation to the extent that such documents are included in the fields searched

Electronic data base consulted during the international search (name of data base and, where practicable, search terms used)

CNPAT; CNKI; WPI; EPODOC; 3GPP: 非地面网络, 窄带物联网, 上行, 卫星, 重复, 分段, 时间, 单位, 持续时间, 间隔, 仰角, 漂移, 速度, 相对, 同步, NTN, NB-IoT, UL, PUCCH, PUSCH, PRACH, satellite, repetition, segment, time, unit, duration, gap, elevation angle, drift, velocity, speed, synchronization, relative

**C. DOCUMENTS CONSIDERED TO BE RELEVANT**

| Category* | Citation of document, with indication, where appropriate, of the relevant passages | Relevant to claim No. |
|---|---|---|
| A | ASIA PACIFIC TELECOM et al. "Time and frequency synchronization to NB-IoT in NTN" *3GPP TSG RAN WG1#104bis-e R1-2102736*, 20 April 2021 (2021-04-20), section 2.2.1 | 1-29 |
| A | MODERATORNTT DOCOMO, INC. et al. "TP on round trip delay drift rate for NTN scenarios" *3GPP TSG RAN WG1 #104bis-e R1-2103936*, 20 April 2021 (2021-04-20), entire document | 1-29 |
| A | CN 112399546 A (HUAWEI TECHNOLOGIES CO., LTD.) 23 February 2021 (2021-02-23) entire document | 1-29 |
| A | US 2019394770 A1 (QUALCOMM INC.) 26 December 2019 (2019-12-26) entire document | 1-29 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 July 2022** | **15 July 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/087392**

| Patent document cited in search report | | | Publication date (day/month/year) | Patent family member(s) | | | Publication date (day/month/year) |
|---|---|---|---|---|---|---|---|
| CN | 112399546 | A | 23 February 2021 | WO | 2021027346 | A1 | 18 February 2021 |
| US | 2019394770 | A1 | 26 December 2019 | WO | 2019246276 | A1 | 26 December 2019 |
| | | | | CN | 112314016 | A | 02 February 2021 |
| | | | | EP | 3811694 | A1 | 28 April 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110461637